# EUROPÄISCHE PATENTSCHRIFT

(11) **EP 2 053 950 B1**
(45) Veröffentlichungstag und Bekanntmachung des Hinweises auf die Patenterteilung: **10.03.2010**
(21) Anmeldenummer: 07802861.0
(22) Anmeldetag: 24.08.2007
(51) Int. Cl.: A47J 31/40

(54) **MITTEL ZUM PENETRIEREN EINER EIN EXTRAKTIONSGUT ENTHALTENDEN PORTIONSVERPACKUNG, VORRICHTUNG ZUM EXTRAHIEREN DES IN DER PORTIONSVERPACKUNG ENTHALTENEN EXTRAKTIONSGUTS SOWIE VERFAHREN ZUR HERSTELLUNG DES MITTELS**
MEANS FOR PENETRATING PORTION PACKAGING CONTAINING EXTRACTABLE MATERIAL, DEVICE FOR EXTRACTING THE EXTRACTABLE MATERIAL CONTAINED IN THE PORTION PACKAGING, AND METHOD FOR THE PRODUCTION OF SAID MEANS
MOYEN POUR TRANSPERCER UN EMBALLAGE-PORTION COMPORTANT UN ÉLÉMENT D'EXTRACTION, DISPOSITIF D'EXTRACTION DE L'ÉLÉMENT D'EXTRACTION CONTENU DANS L'EMBALLAGE-PORTION ET PROCÉDÉ DE PRODUCTION DUDIT MOYEN

(30) Priorität: 25.08.2006 EP 06119565
(43) Veröffentlichungstag der Anmeldung: 06.05.2009
(73) Patentinhaber: Delica AG, 4127 Birsfelden (CH)
(72) Erfinder: AARDENBURG, Kees, 6900 Lugano (CH); HERREN, Peter, 2564 Bellmund (CH); DEUBER, Louis, 8805 Richterswil (CH)
(74) Vertreter: Wenger, René
(86) Internationale Anmeldenummer: PCT/EP2007/058812
(87) Internationale Veröffentlichungsnummer: WO 2008/023057

(56) Entgegenhaltungen:
- EP-A- 1 440 637
- EP-A1- 1 295 554
- WO-A-02/00073
- DE-U- 7 430 910

## Beschreibung

Die Erfindung betrifft ein Mittel zum Penetrieren einer ein Extraktionsgut enthaltenden Portionsverpackung gemäss dem Oberbegriff von Anspruch 1. Weiterhin betrifft die Erfindung eine Vorrichtung zum Extrahieren eines in einer Portionsverpackung enthaltenen Extraktionsguts gemäss Anspruch 19. Derartige Vorrichtungen dienen vor allem zur Zubereitung von Getränken wie z.B. Kaffee, Tee oder Kakao, wobei das Extraktionsgut bevorzugt als Trockensubstanz in einer Hülle der Portionsverpackung eingeschlossen ist. Solche Portionsverpackungen können Kapseln sein, in welchen das Extraktionsgut luftdicht versiegelt ist. Das Anwendungsgebiet ist jedoch nicht auf solche Kapseln beschränkt. So könnten beispielsweise auch so genannte "Sachets" oder "Pouches" mit einem Papierfilter als Umhüllung verwendet werden.

Aus der EP 1 295 554 A1 ist beispielsweise eine Extraktionsvorrichtung für Kapseln bekannt geworden, bei welcher eine Kapsel beim Verschliessen der Kavität von Penetrationsmitteln durchstossen wird. Bei der EP 1 295 554 A1 ist am Boden der Kavität des Kapselhalters ein gattungsmässig vergleichbares Mittel zum Penetrieren der Kapsel gezeigt. Dieses Mittel weist eine Vielzahl von als Nadeln ausgebildeten Perforationselementen auf, die auf der gesamten Oberfläche des Mittels angeordnet sind. Das Penetrationselement selbst ist keglig ausgebildet. Auf der Mantelfläche des Kegels sind drei Längsschlitze angeordnet, wodurch Kaffee als Extrakt aus der Kapsel geleitet werden kann. In der Praxis hat sich gezeigt, dass das Penetrationsmittel schwer herstellbar ist.

In der US 3 596 588 ist eine Vorrichtung gezeigt, bei der als Injektor ein einzelner pyramidenförmig aufgebauter Dorn dient. Auf den Seitenflächen der Pyramide ist je eine Öffnung zum Durchleiten von erhitztem Wasser in eine Kaffee-Portionsdose angeordnet. Zum Penetrieren des Bodens der Dose sind Dorne mit länglich ausgebildeten Öffnungen vorgesehen. Die Durchströmung des Kaffeeguts in der Dose kann mit diesen Mitteln nur unzureichend bewerkstelligt werden. So erfolgt beim Injektor keine gleichmässige Verteilung des Wassers in die Dose. Auf der Gegenseite, d.h. auf der Extraktionsseite, besteht das Problem darin, dass eine ungewünschte Ausschwemmung von Kaffeesatz aus der Büchse durch die Schlitze möglich ist. Neben der schwierigen Herstellbarkeit haben die Penetrationsmittel den Nachteil, dass sie für Kapseln aus Kunststoff wenig geeignet sind.

Die DE 74 30 910 U zeigt eine Extraktions-Vorrichtung für Dosen aus Aluminiumblech. Die Vorrichtung verfügt über einen einzigen Einstechdorn, der zuerst eine Oberseite und dann die gegenüberliegende Unterseite der Dose durchdringt. Am vorderen Ende des Einstechdorns ist für den Perforationsvorgang eine Spitze angeordnet, an die eine zylindrische Mantelfläche eines einfachen oder gestuften Hohlzylinders anschliesst. Auf der oder den Mantelflächen des Hohlzylinders sind eine Vielzahl von Öffnungen angeordnet. Dabei wird der Einstechdorn derart und so weit in die Dose eingeführt, dass nach Abschluss des Penetrationsvorgangs die Spitze ausserhalb der Dose liegt und nicht am Extraktionsvorgang teilnimmt. Der Hohlzylinder ist etwa mittig durch eine Querwand versperrt, die den Innenraum in ein Heisswasser-Zuleitungsteil und ein Brühgetränk-Abflussteil unterteilt. Diese Anordnung ergibt eine komplexe Fluidführung zum Extrahieren des Brühgetränks. Als weiterer Nachteil hat sich in der Praxis gezeigt, dass die Abdichtung des Einstechdorns mittels der vorgeschlagenen O-Ringdichtung schwierig ist. Weitere Nachteile bestehen in fertigungstechnischer Hinsicht, da beispielsweise das Anbringen der Öffnungen auf die Mantelfläche ungünstig ist.

Es ist daher eine Aufgabe der Erfindung, ein Penetrationsmittel zu schaffen, das sich durch eine verbesserte Durchleitung auszeichnet. Mit dem Penetrationsmittel soll ein qualitativ hochwertiges Extraktionsprodukt, beispielsweise Kaffee, Tee oder Kakao, erzeugbar sein. Das Penetrationsmittel soll ausserdem einfach und kostengünstig herstellbar sein und es soll insbesondere auf der Extraktionsseite in der Lage sein, eine eigentliche Siebfunktion zu erfüllen. Diese Aufgabe wird erfindungsgemäss mit einem Mittel gelöst, das die Merkmale im Anspruch 1 aufweist.

Dadurch, dass das Perforationselement als mehrflächiger Körper, insbesondere ein Körper in der Art eines Polyeders ausgebildet ist, wobei wenigstens eine der Flächen eine zur Perforationsrichtung geneigte Fläche ist, auf der Öffnungen vorzugsweise in Lochsieb-Struktur angeordnet sind, ergibt sich eine verbesserte Durchleitung von Fluid in der Portionsverpackung. Insbesondere kann eine vorteilhafte Filterwirkung erreicht werden.

Vor allem in fertigungstechnischer Hinsicht kann es vorteilhaft sein, wenn die Flächen, auf der Öffnungen in der Lochsieb-Struktur angeordnet sind, plane oder konkav gekrümmte Flächen sind. Auf diese Weise lassen sich die Öffnungen einfach auf die Flächen aufbringen. Die konkave Ausgestaltung der Fläche kann aber auch für eine wirkungsvolle Perforation nützlich sein, da durch die nach innen gerichtete Wölbung vorteilhafte Kanten geschaffen werden können.

Die Öffnungen können jeweils Rundlöcher sein, wobei der Durchmesser der Rundlöcher zwischen 0,1 und 0,5mm und bevorzugt zwischen 0,2 und 0,3mm liegen kann. Mit dieser Öffnungs-Konfiguration können qualitativ hochwertige Extraktionsprodukte insbesondere Kaffee erzeugt werden.

Vorteilhaft kann es sein, wenn das Perforationselement als eine Pyramide mit einer vorzugsweise dreieckigen Grundfläche ausgebildet ist, wobei wenigstens eine der Seitenflächen der Pyramide Öffnungen in Lochsieb-Struktur aufweisen kann. Alternativ kann der mehrflächige Körper für das Perforationselement als angeschnittener Formkörper ausgebildet sein, insbesondere als angeschnittener Kegel, eine angeschnittene Pyramide oder ein angeschnittener Keil ausgebildet sein und eine mit Öffnungen in Lochsieb-Struktur versehene Durchleitfläche kann durch den vorzugsweise schiefen Schnitt vorgegeben sein.

Mit der erfindungsgemässen Lochsieb-Struktur kann die Durchleitung eines Fluids durch das jeweilige Perforationselement erheblich verbessert werden. Durchleiten kann dabei einerseits die Einleitung eines Fluids in die Portionsverpackung (Injektion) und andererseits auch die Ausleitung eines Fluids aus der Portionsverpackung (Extraktion) betreffen. Wird das Mittel zum Injizieren eines Fluids verwendet, so kann das Fluid beispielsweise heisses Wasser sein. Das Fluid auf der Ausleitungsseite könnte dann der extrahierte Kaffee sein. Ein Penetrationsmittel könnte zum Beispiel einstückig ausgebildete, zusammengesetzte oder sonstige mehrteilige Perforationselemente aufweisen. Die Lochsieb-Struktur könnte auch in Kombination mit konventionellen Mitteln zum Penetrieren einer Portionsverpackung Vorteile bringen. Eine Ausgestaltung als Mehrflächen-Körper ist nicht zwingend erforderlich, um vorteilhafte Durchleitergebnisse zu erreichen.

Vorteilhaft kann es sein, wenn die Öffnungen als Rundloch ausgestaltet sind. Selbstverständlich wären aber auch andere Lochformen denkbar. In Frage kommen beispielsweise ein Langloch oder ein Loch mit einer Rechteckform (insb. z.B. Quadrat).

Besonders vorteilhaft ist es, wenn die Lochsieb-Struktur wenigstens vier, vorzugsweise jedoch wenigstens zehn Öffnungen aufweist. Durch eine derartige Vielzahl von Öffnungen je Perforationselement kann die Durchflussmenge erhöht werden, wobei bei der Injektion eine optimale Feinverteilung und auf der Extraktionsseite bzw. im Auslassbereich eine vorteilhafte Filterwirkung gewährleistet ist.

Die Lochsieb-Struktur kann ein Lochfeld mit in Reihen angeordneten Öffnungen sein. Das Lochfeld kann beispielsweise aus geraden Reihen oder aus versetzten Reihen bestehen. Im letzteren Fall kann es vorteilhaft sein, wenn die Reihen diagonal versetzt (Versetzung um 45°) sind oder die Öffnungen in 60° versetzten Reihen angeordnet sind.

Vorteilhaft kann es sein, wenn die Lochsieb-Struktur derart ausgebildet ist, dass die Stegbreite kleiner als die Lochweite der Öffnungen ist. Dabei wird unter Lochweite das kleinste Mass für die Lochöffnung verstanden, beispielsweise bei einem Rundloch dessen Durchmesser. Die Stegbreite ist der kleinste ungelochte Zwischenraum zwischen zwei benachbarten Öffnungen (bzw. Löchern). Besonders vorteilhaft kann es sein, wenn die relative freie Lochfläche kleiner als 0,3 ist. Diese Kennzahlen einer Lochsieb-Struktur sind dem Fachmann bekannt und geläufig.

Das Mittel zum Penetrieren einer ein Extraktionsgut enthaltenden Portionsverpackung kann wenigstens ein Perforationselement enthalten, mit welchem eine Hülle der Portionsverpackung durchstossbar ist, das wenigstens teilweise aus einem flächigen Material, insbesondere einer Folie oder einem dünnen Blech besteht. Das wenigstens eine Perforationselement kann an einem vorzugsweise scheibenförmigen Grundbauteil befestigt sein. Durch die Verwendung von flächigem Material für das Perforationselement kann die Herstellung des Penetrationsmittels erheblich vereinfacht werden. Je nach Anwendungszweck ist es sogar vorstellbar, Perforationselemente ohne Öffnungen zum Durchleiten von Fluid zu versehen. Das Fluid könnte in diesem Fall durch eine oder mehrere Öffnungen im Grundbauteil geleitet werden.

Vorteilhaft kann es sein, wenn das Perforationselement aus wenigstens einem Zuschnitt gebildet ist, der aus einer flächigen Lage in eine Endlage aufgerichtet ist, wobei der aufgerichtete Zuschnitt in der Endlage die Form des Perforationselements ganz oder teilweise vorgibt. Ein Zuschnitt lässt sich einfach verarbeiten. Die Verwendung eines Zuschnitts hat unter anderem den Vorteil, dass Öffnungen auf einfache Art und Weise auf diesen aufgebracht werden können.

Besonders vorteilhaft kann es sein, wenn das Perforationselement aus einem einzigen Zuschnitt gebildet ist. Diese Ausgestaltung hat insbesondere den Vorteil, dass zur Stabilisierung des aufgerichteten Zuschnitts in der Endlage nur wenige Verbindungen, beispielsweise Schweissverbinungen notwendig sind.

Der aufgerichtete Zuschnitt kann in der Endlage mittels einer Schweissverbindung stabilisiert sein. Für die Schweissverbindung können eine oder mehrere Schweissnähte oder einzelne Punktschweissungen vorgesehen sein.

In einer weiteren Ausführungsform kann das Perforationselement wenigstens zwei aneinander stossende, eine gemeinsame Seitenkante bildende Flächenabschnitte enthalten, wobei die Flächenabschnitte um die Seitenkante umgeklappt sind. Dabei kann zum Vorgeben der Seitenkante im Zuschnitt eine Schwächungslinie, insbesondere eine Schwächungslinie mit sich begrenzt in Richtung der Schwächungslinie erstreckenden Schnittlinienabschnitten angeordnet sein, um die die Flächenabschnitte umklappbar sind. Auf diese Weise lässt sich ein definierter Umklapp-Vorgang sicherstellen.

Weiterhin kann es vorteilhaft sein, wenn der Zuschnitt wenigstens drei, jeweils dreieckige Flächenabschnitte aufweist, wobei der Zuschnitt durch Umklappen der Flächenabschnitte derart aus der flächigen Lage aufrichtbar ist, dass in der Endlage ein pyramidenartiger Hohlkörper vorliegt.

Die Perforation kann weiterhin verbessert werden, wenn das Perforationselement zwei aneinander liegende Flächenabschnitte aufweist, wobei einer der Flächenabschnitte zur Bildung einer Schneidkante gegenüber einem Rand des anderen Flächenabschnitts nach innen versetzt angeordnet ist. Die zwei aneinander liegenden Flächenabschnitte können dabei durch eine Kehlnaht miteinander verschweisst sein.

Das Perforationselement kann an das Grundbauteil geschweisst sein. Selbstverständlich sind auch andere Befestigungsmittel, wie Klebeverbindungen vorstellbar.

Auf wenigstens einem der Flächenabschnitte des Perforationselements, vorzugsweise auf jedem Flächenabschnitt, kann wenigstens eine Öffnung angeordnet sein, durch die ein Fluid durchleitbar ist. Je nach dem, ob das Penetrationsmittel Injektions- oder Extraktionsseitig verwendet wird, können auf dem wenigstens einen Flächenabschnitt lediglich eine grössere Öffnung oder eine Mehrzahl von kleineren Öffnungen, insbesondere Öffnungen in Lochsieb-Struktur auf dem Flächenabschnitt angeordnet sein.

Schliesslich ist eine Ausgestaltung des Penetrationsmittels denkbar, bei der das Perforationselement einen Grundkörper aufweist, durch den die Form des Perforationselements ganz oder teilweise vorgegeben ist und bei dem wenigstens ein Flächenabschnitt am Grundkörper befestigt ist. Dadurch kann insbesondere eine erhebliche Reduzierung des Herstellungsaufwands erreicht werden. Die Öffnungen der Durchleitfläche lassen sich auf einfache Art und Weise beispielsweise auf einen in einer Ebene liegenden Flächenabschnitt aufbringen. Nach dem Aufbringen der Öffnungen kann der Flächenabschnitt beispielsweise durch Kleben oder Verschweissen am Grundkörper befestigt werden. Da der Folienabschnitt bezogen auf den Grundkörper als separates Bauteil ausgebildet ist, können für den Folienabschnitt andere Materialien und/oder andere Materialdicken verwendet werden. Unter einer Durchleitfläche im Sinne der Erfindung wird eine Fläche des Perforationselements verstanden, das mit den Öffnungen versehen ist, durch welche ein Fluid durchleitbar ist. Selbstverständlich kann auch eine Fläche des Grundkörpers eine derartige Durchleitfläche bilden. Alternativ wäre es sogar auch vorstellbar, dass der Flächenabschnitt keine Öffnungen aufweist und stattdessen die wenigstens eine Durchleitfläche dem Grundkörper zugeordnet wäre.

Selbstverständlich kann es auch für die alternativen Ausgestaltungen vorteilhaft sein, wenn je Durchleitfläche mehrere Öffnungen vorgesehen sind und wenn die Öffnungen - wie vorgängig beschrieben - eine Lochsieb-Struktur ausbilden.

Der mehrflächige Körper kann wenigstens eine Seitenfläche und eine Durchleitfläche, d.h. also wenigstens zwei Flächen, aufweisen. Ein zweiflächiger Körper könnte - selbstverständlich ohne Einbezug einer Grundfläche - beispielsweise ein schief geschnittener Kegel sein, wobei die Seitenfläche die Mantelfläche des Kegels wäre. Ein dreiflächiger Körper könnte beispielsweise eine Pyramide mit einer dreieckigen Grundfläche sein, wobei eine der Seitenflächen die Durchleitfläche bilden könnte. Diese Ausführungsform hat vor allem herstellungstechnische Vorteile. So lassen sich verhältnismässig einfach die Öffnungen auf der Durchleitfläche aufbringen. Dazu kann beispielsweise ein Bohrverfahren mittels eines Lasers eingesetzt werden. Diese Anordnung wirkt sich aber gleichzeitig auch positiv auf die Durchleiteigenschaften des Perforationselements aus. Überraschenderweise hat sich bei dieser Ausführungsform gezeigt, dass die Öffnungen auf der Durchleitfläche nicht unbedingt eine Lochsieb-Struktur haben müssen. Die vorgenannten Vorteile können auch durch eine andere Öffnungs-Anordnungen erreicht werden.

Der mehrflächige Körper für das Perforationselement kann ein angeschnittener Formkörper sein, wobei die Durchleitfläche durch einen vorzugsweise schiefen Schnitt vorgegeben sein kann. Auf diese Weise entsteht eine vorteilhafte asymmetrische Ausbildung der Spitze. Auch ohne exakte Spitzenform ist das Perforationselement zuverlässig in der Lage, die Kapselfolie, eine andere Verpackungsfolie oder dergleichen zu perforieren. Als Formkörper kommen beispielsweise Kegel, Pyramiden oder Keile in Frage. Somit könnte ein Körper für das Perforationselement also ein schief (bzw. schräg) geschnittener Kegel sein. Selbstverständlich wäre es im Grundsatz auch vorstellbar, einen geraden Schnitt vorzusehen. Der entsprechende Körper wäre in diesem Fall ein Kegelstumpf. Wenn der Grundkörper den angeschnittenen Formkörper bildet, kann es z.B. vorteilhaft sein, wenn der Flächenabschnitt mit der Durchleitfläche im Bereich der sich durch den Schnitt des Formkörpers ergebenden Schnittfläche am Grundkörper befestigt ist. Eine solche Formgebung könnte auch für andere Penetrationsmittel vorteilhaft sein.

In einer weiteren Ausführungsform kann die Durchleitfläche eine Keilfläche sein, die vorzugsweise zum Zentrum des Mittels hin gerichtet ist. Dieses Zentrum kann bei einem vorzugsweise rotationssymmetrischen Mittel durch deren Achse definiert sein.

In einer weiteren Ausführungsform kann der wenigstens eine Flächenabschnitt einen Seitenrand aufweisen, der am Grundkörper anliegt. Wenn der Grundkörper flächig ausgebildet ist, beispielsweise wenn er durch eine einzige Grundkörperfläche ausgebildet ist, kann es vorteilhaft sein, wenn der Seitenrand an dieser Grundkörperfläche anliegt. Selbstverständlich wäre es aber auch vorstellbar, dass der Flächenabschnitt derart am Grundkörper anliegt, dass eine gemeinsame Kante gebildet wird.

Vorteilhaft kann es weiterhin sein, wenn der Grundkörper flächig ausgebildet ist und wenn am Grundkörper wenigstens zwei Flächenabschnitte befestigt sind, wobei der Grundkörper und die Flächenabschnitte einen mehrflächigen Körper bilden können. Dabei kann wenigstens einer der Flächenabschnitte und gegebenenfalls der Grundkörper jeweils die Durchleitfläche mit je wenigstens einer Öffnung aufweisen. Es ist insbesondere also nicht unbedingt notwendig, die Durchleitflächen lediglich dem Flächenabschnitt zuzuordnen. Auch der Grundkörper kann über wenigstens eine Durchleitfläche verfügen. Dadurch dass das Perforationselement als mehrflächiger Körper bestehend aus dem Grundkörper und den Flächenabschnitten ausgebildet ist, lassen sich auch verhältnismässig komplexe dreidimensionale Strukturen auf einfache Art und Weise erzeugen. In die jeweiligen Flächen können auf einfache Art und Weise, beispielsweise durch Laserbohr- oder Ätzverfahren Öffnungen einbringen.

Wenn der Grundkörper flächig ausgebildet ist und zwei Flächenabschnitte vorgesehen sind, kann es vorteilhaft sein, wenn der Grundkörper und die Flächenabschnitte jeweils dreieckig ausgebildet sind und wenn der Zusammenbau aus Grundkörper und den Flächenabschnitten eine Pyramidenartige Konfiguration aufweist. Dabei können die beiden Flächenabschnitte als zueinander separate Bauteile oder allenfalls auch einstückig ausgebildet sein.

Vorteilhaft kann es sein, wenn wenigstens ein Flächenabschnitt und der Grundkörper derart zueinander versetzt angeordnet sind, dass durch die Versetzung eine Schneidkante sich ausbildet. Mittels einer solchen Schneidkante lassen sich auch verhältnismässig schwer perforierbare Hüllen von Portionsverpackungen einfach perforieren. Beispielsweise können mittels derartiger Schneidkanten Kapseln aus Polypropylen auch im kalten Zustand gut perforiert werden.

Besonders vorteilhaft kann es sein, wenn wenigstens ein Flächenabschnitt gegenüber einem Rand des Grundkörpers zur Bildung einer Schneidkante nach innen versetzt angeordnet ist. Selbstverständlich wäre es auch vorstellbar, dass beispielsweise ein flächiger Grundkörper gegenüber einem Rand des Flächenabschnitts zur Bildung einer Schneidkante nach innen versetzt angeordnet sein könnte.

Die Perforation kann weiter optimiert werden, wenn ein Klingenelement zum erstmaligen Durchschneiden der Hülle der Perforationsverpackung zum Einleiten des Durchstossvorgangs am Grundkörper und/oder an wenigstens einem Flächenabschnitt angebracht ist. Das Klingenelement kann aus gehärtetem Stahl bestehen. Solche Klingenelemente könnten beispielsweise in der Art von Rasierklingen ausgestaltet sein.

Ein Grundbauteil des Perforationselements kann aus einem flächigen, vorzugsweise scheibenförmigen Zuschnitt gebildet sein, wobei der Grundkörper in einer flächigen Lage durch Schnittlinien vom Zuschnitt getrennt oder trennbar ist und der Grundkörper von der flächigen Lage in eine Endlage aufgerichtet ist. Ein derartiges Grundbauteil mit aufgerichteten Grundkörpern lässt sich auf einfache Art und Weise, beispielsweise aus dünnen Blechen aus Stahl herstellen. Die Schnittlinien können durch Laserschneiden oder durch Stanzoperationen geschaffen werden. Der Aufricht-Vorgang kann auf einfache Art und Weise durch Biegen des ausgeschnittenen Grundkörpers aus der flächigen Lage in die Endlage erreicht werden. Für einen definierten Aufricht-Vorgang kann es vorteilhaft sein, wenn dem Zuschnitt eine Schwächungslinie, insbesondere eine Schwächungslinie die die Enden der Schnittlinie verbindet, vorgesehen ist, wobei der aufgerichtete Grundkörper in der Endlage um die Schwächungslinie umgeklappt ist. Diese Schwächungslinie kann durch wenigstens einen begrenzten Schnittlinien-Abschnitt gebildet sein.

Der Grundkörper und der wenigstens eine Flächenabschnitt kann aus Metall, insbesondere aus Stahl bestehen. Der Flächenabschnitt kann dabei durch eine Schweissverbindung am Grundkörper und/oder am Grundbauteil befestigt sein. Als Schweissverbindung kommt eine durchgehende Naht oder wenigstens eine punktförmige Schweissverbindung in Frage. Selbstverständlich sind aber auch andere Befestigungsarten vorstellbar.

Das Perforationselement, insbesondere der Grundkörper des Perforationselements, kann vorteilhaft wenigstens eine Seitenfläche aufweisen, die in einem spitzen Winkel in die Perforationsrichtung gerichtet ist. Vorteilhaft kann es hierbei sein, wenn der Neigungswinkel derart geneigter Seitenflächen zur Perforationsrichtung kleiner als 15°, bevorzugt zwischen 3° und 10° und besonders bevorzugt etwa 5° ist. Mit derart spitz in Perforationsrichtung zulaufenden Seitenflächen lässt sich die Hülle der Portionsverpackung auf einfache Art und Weise perforieren. Besonders gute Perforationsergebnisse lassen sich erzielen, wenn sowohl die Flächenabschnitte als auch der Grundkörper in einem spitzen Winkel in die Perforationsrichtung gerichtet sind.

In bestimmten Fällen hat sich gezeigt, dass der Neigungswinkel der Durchleitfläche zur Perforationsrichtung vorteilhaft grösser als der Neigungswinkel der Seitenflächen ist. Bei gekrümmten Durchleitflächen könnte zur Bestimmung des Neigungswinkels selbstverständlich auch die Flächennormale durch den Flächenmittelpunkt herangezogen werden. Eine solche Anordnung hat sowohl herstellungstechnische Vorteile als auch einen positiven Effekt auf die Durchleitungseigenschaften. Bevorzugt kann dabei der Neigungswinkel der Durchleitfläche zur Perforationsrichtung grösser als 15° sein. Insbesondere wenn das Mittel als Injektor verwendet wird, kann der Neigungswinkel der Durchleitfläche zwischen 20° und 70°, besonders bevorzugt zwischen 25° und 50° liegen.

In einer bevorzugten Ausführungsform weist das Mittel eine Mehrzahl von Perforationselementen auf. Je nach Grösse der Portionsverpackung weist das Mittel wenigstens drei Perforationselemente auf. Für die bekannten Kapseln kann die Anzahl der Perforationselemente zwischen 8 und 12 liegen.

Die Perforationselemente können vorzugsweise gleichmässig verteilt bzw. in regelmässigen Abständen auf einem Kreis angeordnet sein. Dabei ist das Kreiszentrum vorteilhaft durch das Zentrum des Mittels vorgegeben. Es wäre weiterhin denkbar, die Perforationselemente auf mehreren konzentrischen Kreisen anzuordnen.

Die Durchleitfläche, insbesondere die Durchleitfläche des Flächenabschnitts, kann eine plane Fläche sein. Es hat sich in bestimmten Fällen gezeigt, dass es vorteilhaft sein kann, wenn die Durchleitfläche konkav gekrümmt ist. Selbstverständlich wäre aber auch eine konvexe Krümmung vorstellbar.

In einer speziellen Ausführungsform kann die Durchleitfläche mit der wenigstens einen Öffnung und insbesondere mit den Öffnungen in Lochsieb-Struktur, insbesondere eine Durchleitfläche des Folienabschnitts, und/oder eine Seitenfläche des Grundkörpers, kugelkalottenartig nach innen gekrümmt oder zylindrisch nach innen gekrümmt verlaufen. Im Falle des Zylinders verläuft dabei die Zylinderachse vorteilhaft im rechten Winkel zur Mittelachse des Perforationselements bzw. im rechten Winkel zur Perforationsrichtung. Die konkave Krümmung der Durchleitfläche bewirkt in Kombination mit der asymmetrischen Anordnung, dass je nach Grundform des Perforationselements stets eine vordere Schneidkante gebildet wird, welche mehr oder weniger steil abfällt. Der Krümmungsradius der Durchleitfläche beispielsweise bei einem kegeligen Formkörper kann (z.B.) 6 mm betragen, bei einer Gesamthöhe des Perforationselements von 4 mm. Diese beispielhaften Masse lassen sich jedoch verändern.

Das Perforationselement kann ein gegenüber einer Auflageoberseite zur Abstützung der Portionsverpackung hervorragender Vorsprung sein, wobei die Auflageoberseite und das Perforationselement einem einstückigen Bauteil zugeordnet sein können. Bei einem scheibenförmigen Mittel wäre die Auflageoberseite durch eine Scheibenoberseite vorgegeben.

Das vorgenannte Bauteil kann aus einem Blech, insbesondere einem Blech aus rostfreiem Stahl, bestehen. Ein solches Blech zeichnet sich durch eine gute Bearbeitbarkeit aus. Das Bauteil könnte auch aus einem nichtmetallischen Werkstoff bestehen. Denkbar ist weiterhin, das Penetrationsmittel nicht aus einem einzigen Bauteil herzustellen. Die Perforationselemente könnten beispielsweise als separate Teile ausgebildet sein.

Das Perforationselement kann ein vorzugsweise durch einen Umformprozess geschaffener Hohlkörper sein.

Die Form des Perforationselements könnte aber auch vorteilhaft für ein Mittel sein, das in einem Urformverfahren, insbesondere in einem Spritzgiessverfahren und/oder Sinterverfahren hergestellt wird. Das Mittel könnte hier beispielsweise aus einem keramischen Werkstoff hergestellt sein. Diese Werkstoffe besitzen eine hervorragende Verschleissbeständigkeit und lassen sich in einem Formgebungsschritt (Ceramic Injection Moulding) herstellen. Die aus dem genannten Stand der Technik bekannten Perforationselemente sind als exakt spitzige Körper ausgestaltet, wie sie sich in einem Spritzgiessverfahren nicht befriedigend herstellen lassen, weil sich die Abformbarkeit der Spitzen als sehr schwierig erweist. Auf diese Weise verbleibt stets ein geringfügiger Radius, welcher die Spitze abstumpft und welcher im Extremfall bewirkt, dass das Folienmaterial lediglich gedehnt, jedoch nicht perforiert wird. Selbstverständlich könnte das Penetrationsmittel in bestimmten Fällen auch aus Kunststoffspritzguss sein.

Vor allem in herstellungstechnischer Hinsicht kann es besonders vorteilhaft sein, wenn die Form des Perforationselements durch einen Grundkörper vorgegeben ist und wenn die Durchleitfläche durch einen mit den Öffnungen versehenen Folienabschnitt als Flächenabschnitt gebildet ist, der am Grundkörper befestigt oder befestigbar ist. Ein solcher zweiteiliger Aufbau des Perforationselements hat den Vorteil, dass die Öffnungen auf einfache Art und Weise auf eine flächig ausgelegte Folie aufgebracht werden können. Ein weiterer Vorteil der Verwendung einer Folie ist, dass diese durch ihre Flexibilität zum Befestigen an den Grundkörper einfach an diesen aufgelegt werden kann. Selbstverständlich können die Öffnungen im Folienabschnitt eine Lochsieb-Struktur ausbilden. Zum Erreichen der Vorteile können die Öffnungen aber auch eine andere Öffnungs-Anordnung haben. Es wäre sogar vorstellbar, auf dem Folienabschnitt lediglich eine Öffnung vorzusehen.

Der Grundkörper kann beispielsweise ein durch einen Umform- oder Urformprozess geschaffener Hohlkörper sein.

Wenn der Grundkörper ein offener Hohlkörper ist, dann kann es vorteilhaft sein, wenn die der Perforationsrichtung zugewandte Hohlkörperöffnung durch den Folienabschnitt abgedeckt ist. Zum Befestigen des Folienabschnitts an den Grundkörper kann der Folienabschnitt eine lochlose Umrandung aufweisen, die eine Kontaktfläche zum Grundkörper definiert.

Der Folienabschnitt kann aus einer Folie aus Metall, vorzugsweise aus einem rostfreien Stahl bestehen.

Die Öffnungen können durch einen chemischen Ätzvorgang oder durch Laserbohren geschaffene Löcher sein. Auf diese Art und Weise lassen sich einfach Öffnungen erzeugen. Eine solche Lösung hat auch kostenmässige Vorteile. Weiterhin lassen sich durch den chemischen Ätzvorgang oder durch Laserbohren besonders einfach Löcher mit sehr kleinen Lochweiten oder mit komplizierten Lochformen herstellen.

Die Dicke der Folie kann für den Fall, bei dem die Form des Perforationselements durch einen Grundkörper vorgegeben ist, vorteilhaft zwischen 0,05 und 0,1mm betragen. Derartige Folien sind dem Fachmann auch unter dem Begriff "Mikrofolien" bekannt. Derartige Folien sind insbesondere für das vorgenannte Ätzverfahren geeignet. Die Löcher könnten selbstverständlich aber auch hier durch Laser-Bohren geschaffen werden.

Der Flächenabschnitt kann oder die Flächenabschnitte können aus einer verhältnismässig dicken Folie oder aus einem dünnen Blech aus Metall, vorzugsweise aus einem rostfreien Stahl bestehen. Die Dicke dieser Folie bzw. dieses Blechs kann zwischen 0,1 mm und 1 mm, vorteilhaft zwischen 0,15 mm und 0,6 mm und besonders vorteilhaft zwischen 0,2 und 0,4mm liegen. Aus derartigen Folien bzw. Blechen bestehenden Flächenabschnitte sind verhältnismässig steif, wodurch sie auch alleine zum Perforieren eingesetzt werden können. Die erwähnten Mikrofolien eignen sich hingegen eher zum Einsatz in Penetrationsmitteln, bei denen die Form des Perforationselements durch den Grundkörper vorgegeben ist und bei dem die Mikrofolie beim Perforations-Vorgang nicht oder kaum von der Hülle der Portionsverpackung beaufschlagt ist.

Vorteilhaft kann es sein, wenn der Folienabschnitt an den Grundkörper geschweisst ist. Selbstverständlich wäre es aber auch vorstellbar, den Folienabschnitt auf andere Art, beispielsweise durch Kleben, am Grundkörper zu befestigen.

Wenn das Mittel eine Mehrzahl von Perforationselementen aufweist, kann es vorteilhaft sein, wenn die den Perforationselementen zugeordneten Folienabschnitte aus einem einzigen Folienzuschnitt gebildet sind. Ein solcher Folienzuschnitt ist einfach herstellbar und zeichnet sich durch eine gute Handhabung aus. Selbstverständlich wäre es aber auch vorstellbar, die Folienabschnitte einzeln bzw. separat auszubilden.

Wenn das Mittel eine Mehrzahl von Perforationselementen aufweist kann es vorteilhaft sein, wenn die Mehrzahl der Grundkörper einstückig mit einer Grundplatte ausgebildet sind. Diese Grundplatte ist dabei vorzugsweise scheibenförmig ausgebildet.

Der Folienzuschnitt kann in einer Draufsicht eine zahnradartige Form aufweisen, deren Zähne durch die Folienabschnitte definiert sind. Ein solcher Folienzuschnitt eignet sich bevorzugt für ein Mittel, bei welchem die Perforationselemente auf einem Kreis angeordnet wären.

Das Mittel kann weiter wenigstens eine zentrale Öffnung zum zusätzlichen und/oder alternativen Ein- oder zum Ausleiten von Fluid in oder aus einer durch die Perforationselemente perforierte Portionsverpackung aufweisen. Somit kann sichergestellt werden, dass bei einer allfälligen Verstopfung der Öffnungen der Durchleitfläche (n) eine Durchleitung trotzdem sichergestellt ist. Die genannte zentrale Öffnung wirkt somit gewissermassen als Noteingang bzw. Notausgang für das Fluid.

Ein das wenigstens eine Perforations-Element enthaltendes Grundbauteil kann über eine zentrale Spannhülse mit einem in eine Extraktionsvorrichtung einbaubaren Anschlussteil verbunden sein, wobei die Spannhülse die vorgenannte zentrale Öffnung bilden kann. Die Verbindung zwischen Anschlussteil und der Extraktionsvorrichtung kann zum Beispiel durch einen Bajonett-Verschluss oder andere Verbindungsarten gebildet sein.

Ein weiterer Aspekt der Erfindung betrifft eine Vorrichtung zum Extrahieren eines in einer Portionsverpackung, insbesondere in einer Kapsel enthaltenen Extraktionsgutes mit einem Extraktionsmittel. Die Vorrichtung enthält zur Bildung einer Extraktionskammer zwei vorzugsweise dichtend gegeneinander pressbare Kammerteile, wobei ein Kammerteil als Kapselhalter mit einer Kavität zur Aufnahme der Portionsverpackung und das andere Kammerteil als Verschlussteil zum Verschliessen der Kavität ausgebildet ist. Dabei enthält wenigstens eines der Kammerteile, vorzugsweise jedes Kammerteil (d.h. sowohl der Kapselhalter als auch das Verschlussteil) das vorgängig beschriebene Mittel zum Penetrieren der Kapsel und zum Durchleiten des Extraktionsmittels durch die geschlossene Extraktionskammer oder das Penetrationsmittel ist wenigstens einem der Kammerteile zugeordnet. Durch die Verwendung derartiger Mittel lässt sich beispielsweise ein Kaffee zubereiten, der hohen Qualitätsanforderungen genügt.

Wenigstens eines der Mittel kann mit der Vorrichtung verschraubt sein. Hierzu kann der Scheibenkörper des Penetrationsmittels ein zentrales Loch zum Durchführen und Aufnehmen einer Befestigungsschraube aufweisen.

In einer vorteilhaften Ausführungsform der Vorrichtung als Kapselmodul kann das Verschlussteil als Injektor zum Einführen des Extraktionsmittels in die Kapsel ausgebildet sein. Der Injektor kann dabei ein als einstückiges Bauteil ausgebildetes Mittel sein. Am Boden der Kavität kann eine Filterplatte zum Ableiten des Extrakts der Kapsel angeordnet sein. Diese Filterplatte kann dabei ein zweiteilig ausgebildetes Mittel gemäss dem vorgängig beschriebenen Filteraufbau sein. Unter der Filterplatte kann im Kapselhalter eine Ableitung für das Extrakt angeordnet sein

Am Boden der Kavität kann eine ringförmige Aufnahmewanne angeordnet sein, die einen Ringspalt zwischen der Filterplatte und dem Boden der Kavität bildet. Eine derartige Aufnahmewanne eignet sich insbesondere für Penetrationsmittel, bei denen die Perforationselemente auf einem Kreis angeordnet sind.

Weitere Einzelmerkmale und Vorteile der Erfindung ergeben sich aus der nachstehenden Beschreibung von Ausführungsbeispielen und aus den Zeichnungen. Es zeigen:
- Figur 1:: einen Schnitt durch eine erfindungsgemässe Vorrich- tung zum Extrahieren eines in einer Kapsel enthalte- nen Extraktionsgutes,
- Figur 2:: eine vergrösserte Darstellung des Details C aus Figur 1 mit einer Injektorplatte und einer Filterplatte als Penetrationsmittel,
- Figur 3:: die Detailansicht gemäss Figur 2, jedoch in Schliess- stellung,
- Figur 4:: eine perspektivische Darstellung der Injektorplatte der Vorrichtung gemäss Figur 1,
- Figur 5:: einen Querschnitt durch die Injektorplatte gemäss Fi- gur 4,
- Figur 6:: eine perspektivische Darstellung eines alternativen Penetrationselements;
- Figur 7:: eine weitere Alternative eines Penetrationselements,
- Figur 8:: eine Draufsicht auf die Injektorplatte gemäss Figur 4,
- Figur 9:: eine vergrösserte Darstellung einer Draufsicht auf das Perforationselement der Injektorplatte gemäss Fi- gur 4 (Detail A gem. Fig. 8),
- Figur 10:: einen Schnitt durch die Filterplatte der Vorrichtung gemäss Figur 1,
- Figur 11:: eine Schnittdarstellung mit einer Folie und eine Grundplatte für die Filterplatte gemäss Figur 10 vor der Befestigung der Folie an den Grundkörper,
- Figur 12:: eine perspektivische Ansicht auf eine Oberseite der Grundplatte gemäss Figur 11,
- Figur 13:: eine perspektivische Ansicht auf eine Rückseite der Grundplatte gemäss Figur 11,
- Figur 14:: eine detaillierte Darstellung des Grundkörpers (De- tail D gem. Fig. 11, Schnitt x-x gem. Fig. 14a),
- Figur 14a:: eine Vorderansicht des Grundkörpers mit dem Schnitt- verlauf x-x,
- Figur 15:: eine Draufsicht auf die Grundplatte gemäss Figur 11,
- Figur 16:: eine Draufsicht auf die Folie gemäss Figur 11,
- Figur 17:: eine perspektivische Darstellung der Folie (umge- dreht),
- Figur 18:: eine detaillierte Darstellung eines Folienabschnitts der Folie gemäss Figur 11 (Detail B gem. Fig. 17),
- Figur 19:: eine Kapsel für die Vorrichtung,
- Figur 20:: eine vergrösserte Darstellung der Extraktionsseite der Vorrichtung in Schliessstellung mit der Kapsel gemäss Figur 19,
- Figur 21: eine stark vergrösserte Darstellung der Kapsel mit einer Vorbrührinne (Detail E gemäss Fig. 19),
- Figur 22: die Kapsel gemäss Figur 21 nach dem Schliessvorgang (Schliessstellung)' mit einem einen Kapselboden teil- weise durchstossenden Perforationselement,
- Figur 23: die Kapsel gemäss Figur 21 nach einem Brühvorgang, in welchem der Kapselboden vollständig durchstossen ist,
- Figur 24: eine Vorrichtung mit einer darin eingesetzten Kapsel gemäss einem alternativen Ausführungsbeispiel zur Fi- gur 1,
- Figur 25: die Vorrichtung gemäss Figur 24 in Schliessstellung,
- Figur 26: eine perspektivische Darstellung einer Filterplatte für die Vorrichtung gemäss Figur 24,
- Figur 27: eine Explosionsdarstellung der Injektorplatte gemäss Figur 26,
- Figur 28: eine Seitenansicht auf die Injektorplatte,
- Figur 29: ein Grundbauteil für die Injektorplatte mit aufge- richteten Grundkörpern,
- Figur 30: eine vergrösserte Darstellung eines einzelnen Perfo- rationselements für die Injektorplatte (Detail F ge- mäss Fig. 26),
- Figur 31: das Perforationselement gemäss Figur 30, jedoch ohne einen der Flächenabschnitte,
- Figur 32: das Perforationselement gemäss Figur 30 ohne Flächen- abschnitte,
- Figur 33: die Flächenabschnitte für das Perforationselement gemäss Figur 30,
- Figur 34: eine vereinfachet Darstellung eines Zuschnitts für das Grundbauteil gemäss Figur 29,
- Figur 35: eine vergrösserte Detaildarstellung auf einen Grund- körper in flächiger Lage (Detail G),
- Figur 36: eine Spitze des Grundkörpers in weiter vergrösserter Darstellung,
- Figur 37: eine vergrösserte Darstellung einer Injektorplatte der Vorrichtung gemäss Figur 24,
- Figur 38: eine alternative Injektorplatte,
- Figur 39: eine perspektivische Darstellung einer weiteren Fil- terplatte
- Figur 40: eine weitere Injektorplatte,
- Figur 41: eine Detailansicht auf einen aufgerichteten Grundkör- per für die Filterplatte gemäss Figur 39,
- Figur 42: eine Ansicht auf das Perforationselement gemäss Figur 39 ohne Flächenabschnitte,
- Figur 43: ein fertig zusammengebautes Perforationselement (De- tail J gemäss Fig. 39),
- Figur 44: eine perspektivische Darstellung eines Anschlussteils für die Vorrichtung gemäss Figur 24 mit einer Injek- torplatte,
- Figur 45: das Bauteil gemäss Figur 44 in perspektivischer Dar- stellung,
- Figur 46: eine perspektivische Ansicht auf einen Ausschnitt ei- nes weiteren Zuschnitts für ein Grundbauteil,
- Figur 47: eine perspektivische Darstellung eines Perforations- elements mit aus dem Zuschnitt gemäss Figur 46 er- stellten Grundbauteil und daran befestigten Flächen- abschnitten,
- Figur 48: eine perspektivische Darstellung eines Bodenteils mit darin eingesetzter Filterplatte gemäss einer weiteren Ausführungsform,
- Figur 49: eine perspektivische und vergrösserte Darstellung auf ein weiteres Perforationselement mit einem noch nicht befestigten Flächenabschnitt,
- Figur 50: eine weitere alternative Ausgestaltung eines Perfora- tionselements,
- Figur 51: eine perspektivische Darstellung eines Grundbauteils sowie eines einzelnen Perforationselements für eine Filterplatte,
- Figur 52: eine detaillierte Darstellung eines auf dem Grundbau- teil befestigten Perforationselements des Ausfüh- rungsbeispiels gemäss Figur 51,
- Figur 53: eine perspektivische Darstellung eines Perforations- elements während eines Schweissvorgangs zum Stabili- sieren der aufgerichteten Lage,
- Figur 54: einen Zuschnitt für das Perforationselement gemäss Figur 53,
- Figur 55: einen Zuschnitt für ein weiteres Perforationselement, und
- Figur 56: eine weitere Ausgestaltung eines Perforationsele- ments.

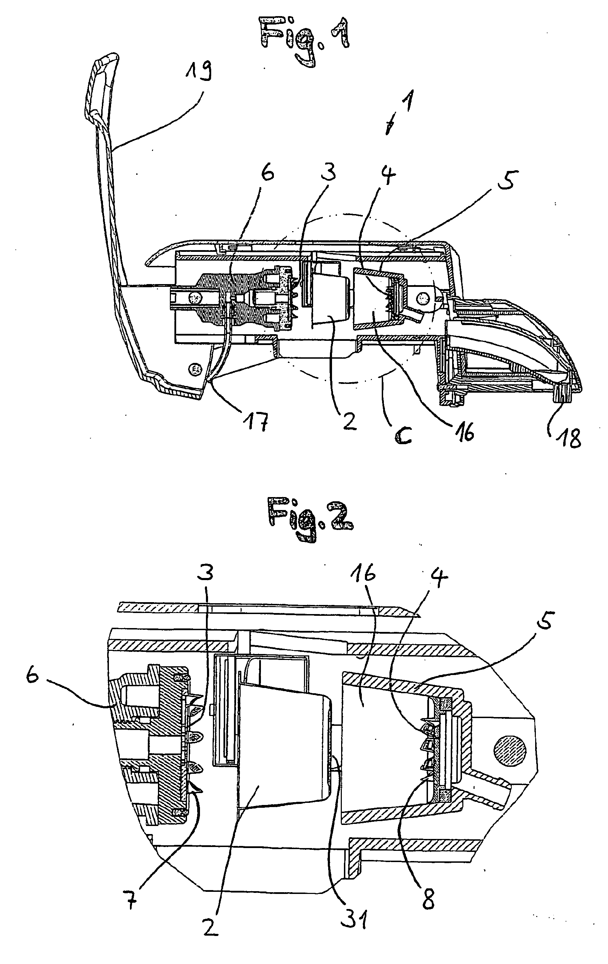

In Figur 1 ist eine mit 1 bezeichnete Vorrichtung zum Extrahieren eines in einer Kapsel 2 enthaltenen Extraktionsguts gezeigt. Diese Vorrichtung kann als Modul in eine Kaffeemaschine eingebaut werden. Die Vorrichtung eignet sich nicht nur zum Brühen von Kaffee, sondern auch für Tee oder Kakao. Selbstverständlich sind die Vorrichtung sowie die nachfolgend beschriebenen Mittel nicht auf die Verwendung in derartigen Brühvorrichtungen zum Herstellen von Getränken beschränkt. Weiterhin könnten statt Kapseln auch andere Portionsverpackungen, beispielsweise so genannte Sachets oder Pouches verwendet werden. Denkbar wäre auch ein Einsatz für chemisch/wissenschaftliche Extraktionsgeräte, beispielsweise zum Extrahieren von Proben, die zu Konservierungszwecken vorher verkapselt oder auf andere Weise umhüllt worden sind.

Die Vorrichtung 1 verfügt über zwei dichtend gegeneinander pressbare Kammerteile zum Bilden einer Extraktionskammer. Dabei ist das erste Kammerteil ein Verschlussteil 6, an dem eine Druckleitung 17 angeschlossen ist. Das vordere Ende des Verschlussteils 6 wird durch eine Injektorplatte 3 gebildet, über die erhitztes Wasser unter Druck in die Kapsel 2 eingespritzt werden kann. Eine nicht näher dargestellte Heizeinrichtung sorgt für die erforderliche Wassertemperatur und eine Pumpe sorgt für den nötigen Wasserdruck. Auf der gegenüberliegenden Seite ist als zweites Kammerteil ein Kapselhalter 5 mit einer Kavität 16 zur Aufnahme der Kapsel angeordnet. Am Boden der Kavität 16 ist eine Filterplatte 4 angeordnet, mit welcher die Kapsel 2 penetrierbar ist und über welche das Extrakt aus der Kapsel abgeleitet werden kann. Der fertige Kaffee fliesst über einen Ausguss 18 in eine bereitgestellte Tasse (nicht dargestellt). Das Grundprinzip solcher Extraktionskammern für Kapseln ist seit längerer Zeit bekannt und gebräuchlich. Eine vergleichbare Extraktionskammer ist beispielsweise durch die EP 1 500 357 oder auch aus der EP 1 295 554 bekannt geworden. Die Hülle der Kapsel ist eine Folie aus Kunststoff, aus Metall oder aus einem Laminat.

Im vorliegenden Ausführungsbeispiel ist der Kapselhalter 5 horizontal verschiebbar gelagert und kann über einen schwenkbar gelagerten Betätigungshebel 19 in Richtung des Verschlussteils 6 zum Herstellen der Extraktionskammer verschoben werden. Die Kapsel 2 befindet sich mittels einer nicht näher bezeichneten Hilfseinrichtung zum Halten der Kapsel 2 in einer horizontalen Ausgangsposition. Beim Schliessvorgang wird die Kapsel 2 aus dieser Position durch Verschieben des Kapselhalters 5 von der Kavität 16 aufgenommen. Für die vorliegende Erfindung spielt es keine Rolle, ob die Kapsel horizontal oder vertikal in ein entsprechendes Brühmodul eingelegt wird. Die Funktion der Penetrationsmittel ist grundsätzlich unabhängig von der Ausgestaltung der Schliessmechanik gegeben.

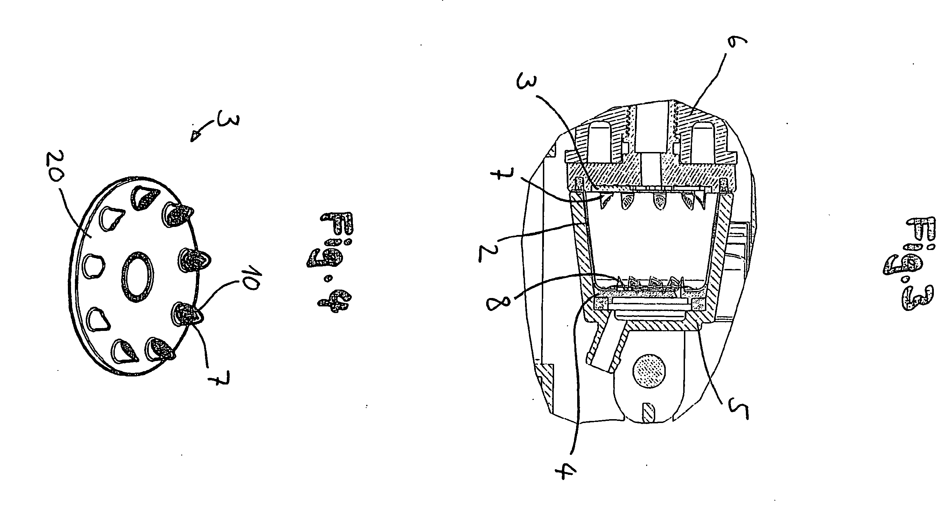

Details der Vorrichtung sind aus den Figuren 2 und 3 gut erkennbar. Ersichtlicherweise sind sowohl am Verschlussteil 6 als auch am Boden des Kapselhalters Mittel zum Penetrieren der Kapsel 2 angeordnet, wobei diese Mittel 3 und 4 jedoch verschieden ausgestaltet sind. Das mit 3 bezeichnete Penetrationsmittel leitet das erhitzte Wasser in die Kapsel 2 ein, während mit Hilfe des Penetrationsmittels 4 das Extrakt aus der Kapsel 2 abgeführt wird. Das Penetrationsmittel 3 wird deshalb nachfolgend als Injektorplatte und das Penetrationsmittel 4 nachfolgend als Filterplatte bezeichnet.

Ersichtlicherweise weist die Injektorplatte 3 Perforationselemente 7 auf, die die Deckelfolie (hier nicht dargestellt) der Kapsel 2 perforieren bzw. durchstossen können. Auch an der Filterplatte 4 sind Penetrationselemente 8 angeordnet. In der in Figur 3 gezeigten Schliessstellung ist erkennbar, dass die Penetrationskörper 7 die Deckelfolie und die Penetrationskörper 8 die Bodenfläche der Kapsel 2 durchstossen haben. In dieser Stellung kann ein Fluid zum Extrahieren des in der Kapsel 2 enthaltenen Extraktionsguts durch die jeweiligen Penetrationsmittel durchgeleitet werden.

Wie Figur 4 zeigt, besteht die Injektorplatte 3 aus neun Perforationselementen 7, die auf einem Scheibenkörper 20 angeordnet sind. Der Scheibenkörper 20 ist ersichtlicherweise rotationssymmetrisch ausgebildet.

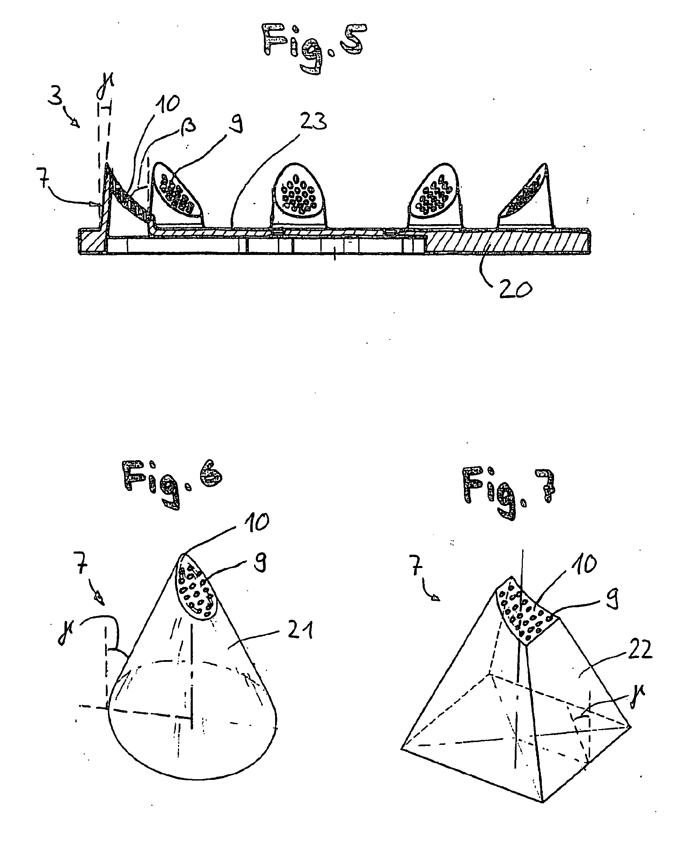

Aus der Schnittdarstellung gemäss Figur 5 ist ersichtlich, dass das Perforationselement 7 die Form eines schief angeschnittenen Kegels aufweist. Die Mantelfläche des Kegels läuft dabei verhältnismässig spitz in Perforationsrichtung zu, wobei der Neigungswinkel γ der Mantelfläche zur Perforationswinkel etwa 5° beträgt. Der Schnitt des Kegels bildet die mit Öffnungen 9 versehene Durchleitfläche 10. Aus Figur 5 ist deutlich ersichtlich, dass die Durchleitfläche weniger steil zur Perforationsrichtung als die Mantelfläche des Kegels verläuft. Der Neigungswinkel β zur Perforationsrichtung beträgt im vorliegenden Ausführungsbeispiel ca. 56°. Eine derart geneigte Durchleitfläche 10 macht eine vorteilhafte Injektion von erhitztem Wasser in die Kapsel möglich. Ein weiterer Vorteil einer solchen Anordnung ist, dass beispielsweise ein Laser zum Bohren der Löcher einfach positioniert werden kann. Weiterhin ist aus Figur 5 erkennbar, dass die Durchleitfläche 10 nicht ganz plan verläuft, sondern leicht konkav ausgestaltet ist. Diese Krümmung verläuft hier zylindrisch gekrümmt. Der Schnitt des kegeligen Formkörpers ist durch einen Zylinder vorgegeben, dessen Zylinderachse im rechten Winkel zur Perforationsrichtung verläuft.

Sodann zeigt Figur 5 weiter, dass das Perforationselement 7 ein gegenüber der Auflageoberseite 23 zur Abstützung der Kapsel hervorragender Vorsprung ist, der als Hohlkörper ausgebildet ist. Die Injektorplatte 3 könnte durch ein Umformverfahren, beispielsweise in einer Tiefziehtechnik, hergestellt werden. Nach dem Tiefziehen werden durch Laserbohren die Öffnungen 9 aufgebracht. Das Bauteil 7 besteht bevorzugt aus einem Blech aus rostfreiem Stahl. Aufgrund der verhältnismässig komplizierten Formgebung hat es sich als vorteilhaft erwiesen, wenn das Bauteil mit Hilfe eines MIM-Verfahrens oder einem Elektroerosionsverfahrens geformt wird. Selbstverständlich könnte das Perforationselement - statt als Hohlkörper - auch als Vollkörper ausgebildet sein, wobei die Öffnung durch einen sich in die Durchleitfläche öffnender Kanal durch den Vollkörper gebildet wäre.

In den Figuren 6 und 7 sind alternative Ausgestaltungen von Spitzen gezeigt. Das Perforationselement 7 gemäss Figur 6 weist eine kegelige Grundform auf. Der Neigungswinkel γ der Mantelfläche 21 ist hier ersichtlicherweise deutlich grösser als im vorhergehenden Ausführungsbeispiel. Weiterhin ist die Durchleitfläche 10 verhältnismässig klein ausgebildet. Wie aus Figur 7 hervorgeht, muss der Formkörper für das Perforationselement nicht unbedingt auf einem Kegel basieren. In Figur 7 ist der Formkörper eine Pyramide mit rechteckiger Grundfläche, die zum Bilden der Durchleitfläche 10 schief angeschnitten ist. Die Pyramidenseitenflächen 22 bilden ersichtlicherweise ebenfalls einen spitzen Winkel γ zur Perforationsrichtung.

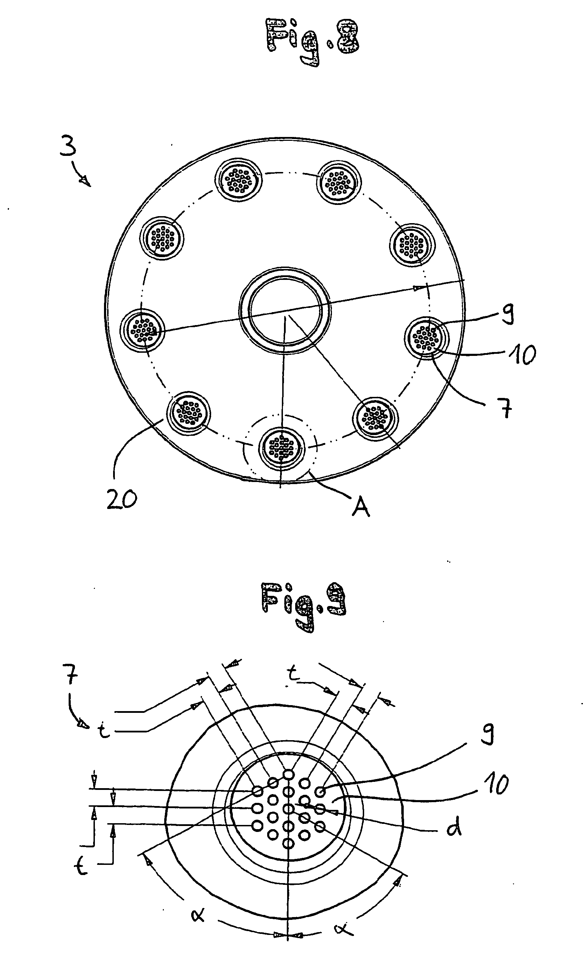

Figur 8 zeigt, dass die einzelnen Perforationselemente 9 gleichmässig verteilt auf einem Kreis um das Zentrum des Scheibenkörpers 20 angeordnet sind. Aus der Detaildarstellung in Figur 9 eines einzelnen Perforationselements 7 ist erkennbar, dass die Öffnungen 9 eine Lochsieb-Struktur ausbilden. Die Öffnung 9 ist dabei jeweils ein Rundloch. Selbstverständlich wären aber auch andere Lochformen denkbar. Die Lochsieb-Struktur ist ein Lochfeld mit in Reihen angeordneten Öffnungen 9, wobei die Reihen in 60° zueinander versetzt sind (α = 60°). Die Reihen könnten aber auch diagonal versetzt angeordnet sein (α wäre dann 45°). Selbstverständlich wäre es auch denkbar, gerade Reihen von Öffnungen vorzusehen. Der Durchmesser d der Rundlöcher kann zwischen 0,2 und 0,5mm (z.B. 0,25mm) betragen. Mit t ist die Lochteilung bezeichnet, die zwischen 0,3 und 1,0mm (z.B. t = 0,45mm) liegen kann. Vorteilhaft ist es in der Regel, wenn die Stegbreite b (b = t-d) kleiner als der Durchmesser d der Rundlöcher ist.

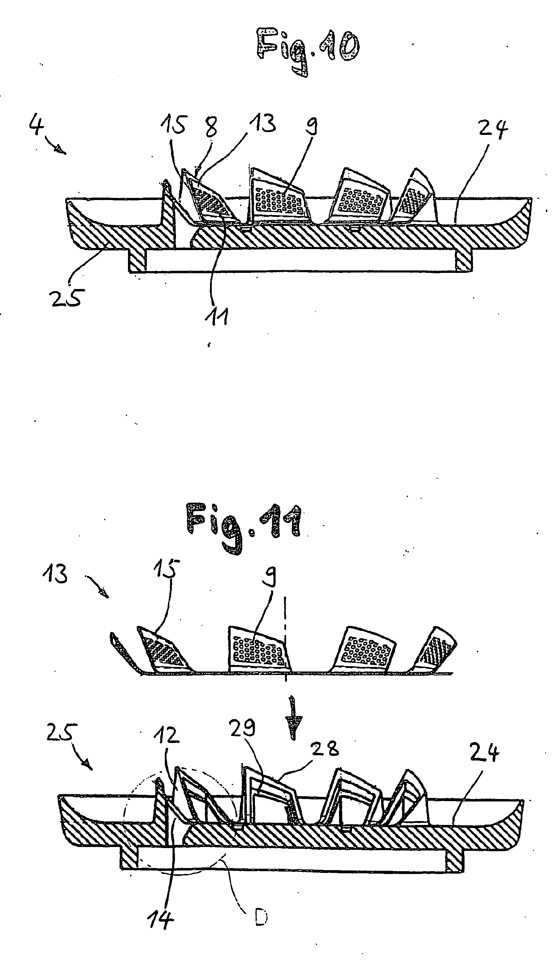

In Figur 10 ist die Filterplatte 4 in einer Querschnittsdarstellung gezeigt. Deutlich erkennbar sind auf der Durchleitfläche 11 des Perforationselements 8 eine relativ grosse Zahl von relativ kleinen Öffnungen 9 angeordnet (verglichen mit der Durchleitfläche des Injektors, vgl. z.B. Fig. 9). Dies ist nötig, weil die Durchleitfläche 11 eine Filterwirkung haben soll. So muss beispielsweise bei der Extraktion von Kaffee das Extrakt gefiltert werden.

Die mit den Öffnungen 9 versehene Durchleitfläche 11 ist in einem Flächenabschnitt 15 angeordnet, der an die einzelnen Perforationselemente 8 befestigt ist. Somit besteht die Filterplatte 4 also aus einer Grundplatte 25 und aus einer die Flächenabschnitte 15 enthaltenden Folie bzw. Zuschnitt 13. Dieser zweiteilige Aufbau der Filterplatte ist aus Figur 11 ersichtlich. Die mit 13 bezeichnete Folie mit den nachfolgend als Folienabschnitten bezeichneten Flächenabschnitten 15 dient im Wesentlichen zur Filtrierung des Extrakts aus der Kapsel. Die Grundplatte 25 mit den Grundkörpern 12, die die Form der Perforationselemente vorgebend, hat im Wesentlichen die Aufgabe, die Kapsel (d.h. die Bodenfläche der Kapsel) zu durchstossen bzw. zu perforieren. Die Folie 13 wird auf die Grundplatte 25 abgelegt (mit Pfeil angedeutet) und kann dann mit der Grundplatte 25 verschweisst werden. Selbstverständlich wären aber auch andere Befestigungsmöglichkeiten (z.B. Kleben) denkbar. Die Dicke der Stahl-Folie beträgt zwischen 0.05 und 0.1 mm. Es sind je nach Anwendungszweck auch andere Foliendicken denkbar.

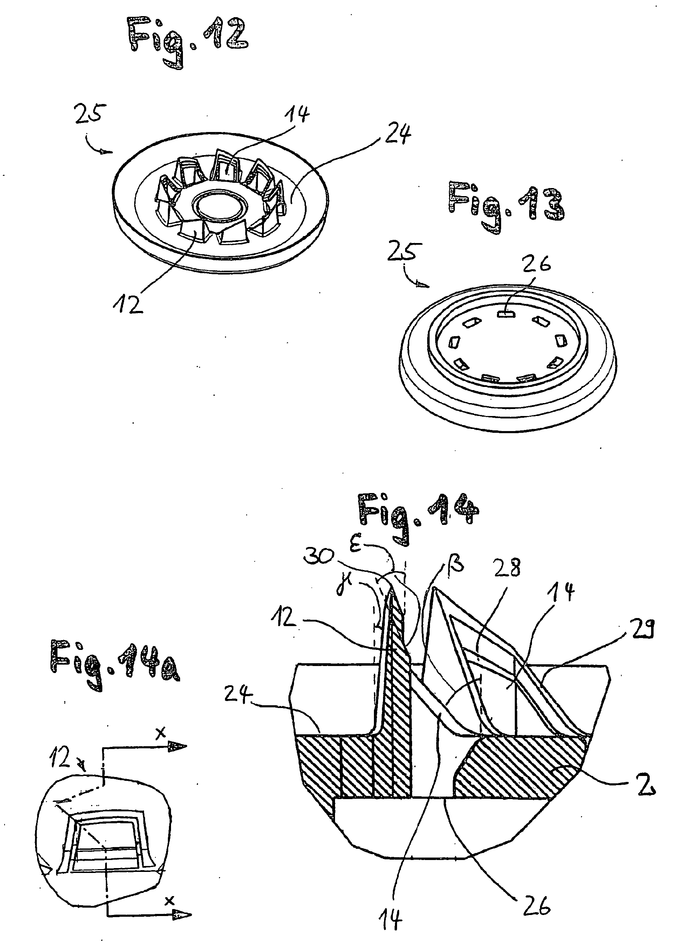

Wie aus Figur 12 hervorgeht, ist die als Grundbauteil vorgesehene Grundplatte rotationssymmetrisch ausgebildet und weist eine scheibenförmige Konfiguration auf. Auf der Grundplatte sind neun Grundkörper 12 angeordnet, die als gegenüber der planen Auflageoberseite 24 vorragende Vorsprünge ausgebildet sind. Auf der Rückseite der Grundplatte 25 sind, wie Figur 13 zeigt, entsprechend neun Auslässe 26 angeordnet.

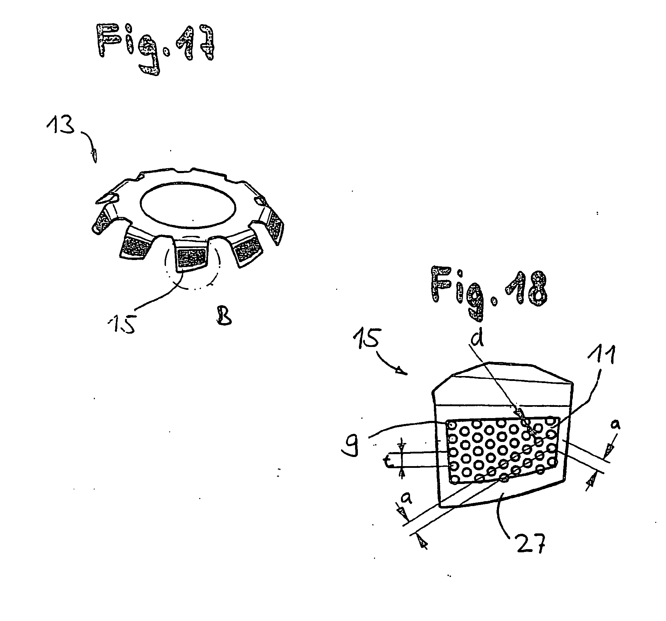

Wie insbesondere Figur 14 deutlich zeigt, ist der Grundkörper 12 keilförmig ausgebildet. Die Keilform erzeugt einen vorderen Rand 29 mit einer Schneidkante 30. Die dem Zentrum der Grundplatte zugewandte Keilfläche ist um einen Winkel ε zur Perforationsrichtung geneigt. Dieser Neigungswinkel ε kann zwischen 10° und 30° (z.B. hier: ca. 23°) betragen. Die Seitenfläche des Grundkörpers 12 verläuft spitzwinklig in Perforationsrichtung, wobei γ vorzugsweise kleiner als 10° ist (hier: γ = 5°). Der Grundkörper 12 ist als offener Hohlkörper ausgebildet, wobei das vordere offene Ende vom Rand 29 umgeben ist. Hinter dem Rand 29 ist zurückversetzt eine umlaufende Schulter 28 angeordnet, die als Kontaktfläche für den Folienabschnitt dient (der Folienabschnitt weist deshalb hierzu einen lochlosen Randbereich auf, vgl. Fig. 18). Die Schulter 28 gibt damit die Durchleitfläche vor. Die Schulter 28 ist um einen Winkel β zur Perforationsrichtung geneigt, der grösser als der Neigungswinkel der Keilfläche ist (β > ε). Auf diese Weise lassen sich die Perforations- und Filtereigenschaften des Perforationselements optimieren. Hier, d.h. im vorliegenden Ausführungsbeispiel, beträgt der Neigungswinkel β ca. 40°.

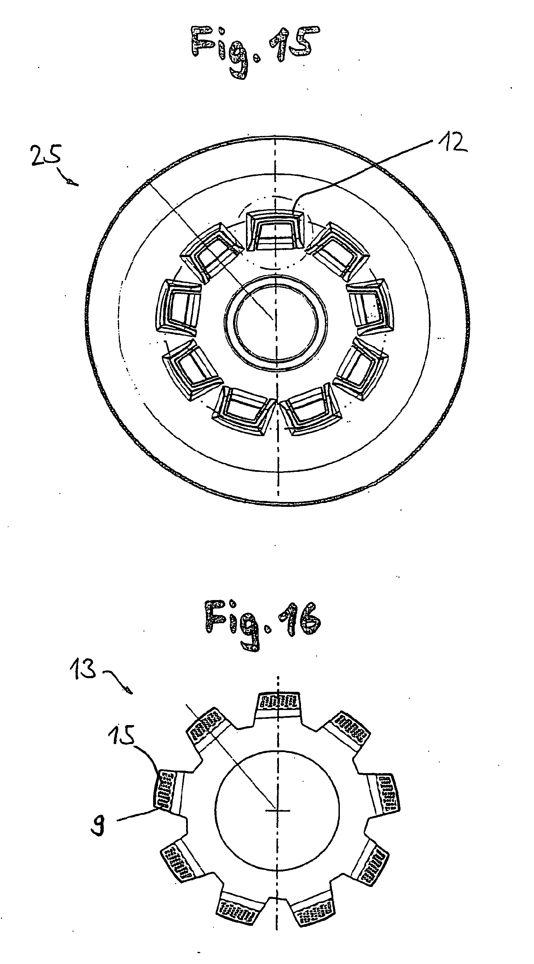

Figur 15 zeigt, dass die Grundkörper 12 gleichmässig verteilt auf einem Kreis um die Grundplatte 25 angeordnet sind. Figur 16 sowie Figur 17 zeigen einen mit 13 bezeichneten zugehörigen Zuschnitt für die Folie, die auf die Grundplatte befestigbar ist.

Wie aus Figur 18 hervorgeht, sind die Öffnungen 9 auf dem Folienabschnitt in einer Lochsieb-Struktur angeordnet. Die als Rundlöcher ausgebildeten Öffnungen 9 weisen einen Durchmesser d von zwischen 0,1 und 0,3 mm auf (z.B. hier: 0,17 mm für Kaffee). Die Lochgrösse hängt jedoch vom Extraktionsgut und von der gewünschten Extraktionsqualität ab und ist beliebig anpassbar. Die Stegbreite b ist kleiner als der Durchmesser d der Löcher 9. Mit a ist der Reihenabstand zwischen den Reihen bezeichnet, der hier 0,25 mm beträgt. Die Reihen sind hier diagonal versetzt angeordnet.

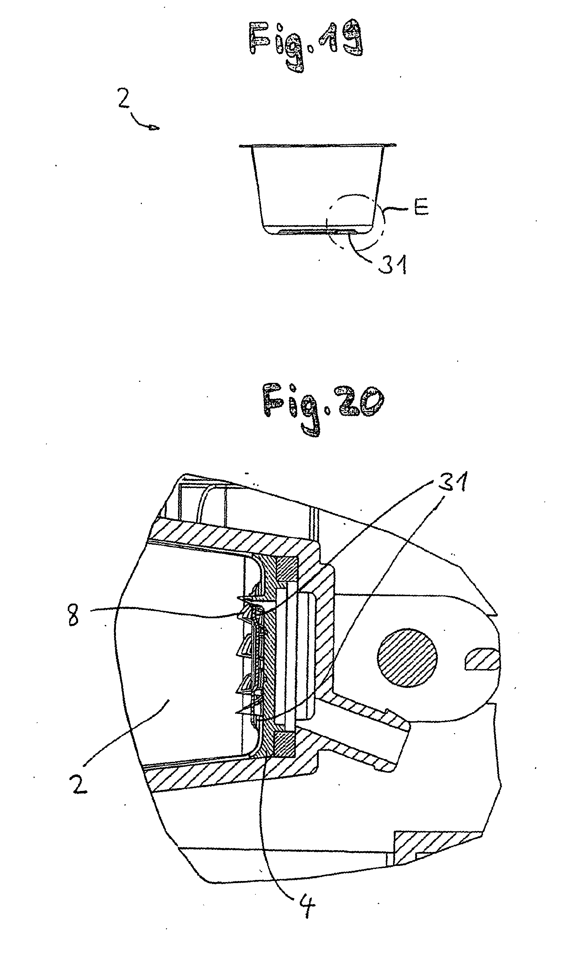

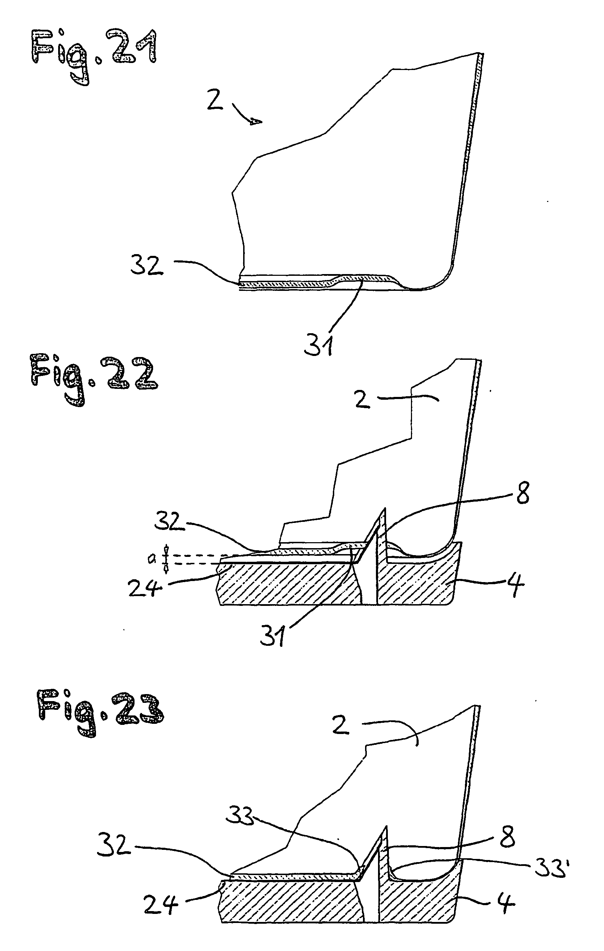

Die in Figur 19 dargestellte Kapsel 2 weist am Boden einen zurückversetzen Bodenabschnitt 31 auf, der im Querschnitt wannenartig ausgebildet ist. Dieser Bodenabschnitt ist als ringförmig umlaufende, nach innen gerichtete Vertiefung 31 ausgebildet und wird nachfolgend als Vorbrührinne bezeichnet. Diese Vorbrührinne 31 ist besonders gut aus der Detaildarstellung gemäss Figur 21 erkennbar. Aus Figur 2 ist ebenfalls ein zurückversetzter (jedoch nicht rinnenartiger) Bodenabschnitt erkennbar. Hier ist der nach innen versetzte Bodenabschnitt eine einzige Wanne 31.

Beim Verschliessen der Extraktionskammer wird die Bodenfläche der Kapsel 2 gegen die mit Perforationselementen 7 (ohne Folie dargestellt) versehene Filterplatte 4 gepresst und dabei im Bereich der Vorbrührinne 31 perforiert. Eine perforierte Wanne 31 einer Kapsel 2 in Schliessstellung (bzw. Vorbrühstellung) ist in Figur 22 gezeigt. Ersichtlicherweise weist die Kavität 16 gegenüber der Kapsel eine Übergrösse auf, mit welcher die Ausdehnung der Kapsel bei der Extraktion aufgefangen werden kann (Dies gilt vor allem für Kapseln aus Kunststoff oder einem Laminat). Insbesondere der Kapselboden ist in der Schliessstellung vor dem Brühvorgang von der Auflageoberseite beabstandet. Dieser Abstand a kann beispielsweise zwischen 0,5 und 1,0 mm liegen. Der Abstand sowie die Vorbrührinne 31 hat zur Folge, dass vor dem Brühvorgang erst eine teilweise Perforierung des Kapselbodens vorliegt, wodurch die Durchleitfläche nur schwach freigesetzt ist. Sobald unter Druck Brühwasser durch die penetrierte Kapsel eindringt, baut sich im Innern der Kapsel ein Druck auf, wobei auch der Kapselboden gegen die Auflageoberseite 24 der Filterplatte 4 gepresst wird. Im Weiteren dehnt sich die Kapselhülle auch infolge der Temperaturerhöhung aus. In Figur 23 ist die einem solchen Brühdruck unterworfene Kapsel 2 gezeigt. Der Kapselboden wurde ersichtlicherweise infolge des Brühdrucks derart verformt, dass er flächig auf der Auflageoberseite 24 aufliegt. Nachdem damit auch der Kapselboden 32 vollständig perforiert ist, fliesst das Getränk unter Ausnützung der nahezu vollständig freigegebenen Fläche der Durchleitfläche weg. Zudem werden die Perforationselemente durch eine Verformung der Vorbrührinne an ihrer Basis durch die nach unten auf die Filterplatte verdrängte Kapselhülle abgedichtet Diese Dichtwirkung wird ersichtlicherweise durch die an das Perforationselement anliegenden Lappen 31, 31' des Kapselbodens erzielt. Tests haben überraschenderweise gezeigt, dass mit einer Rinnenanordnung gegenüber einer Wannenanordnung (vgl. Kapsel gemäss Fig. 2) eine deutlich bessere Dichtwirkung erreicht werden kann.

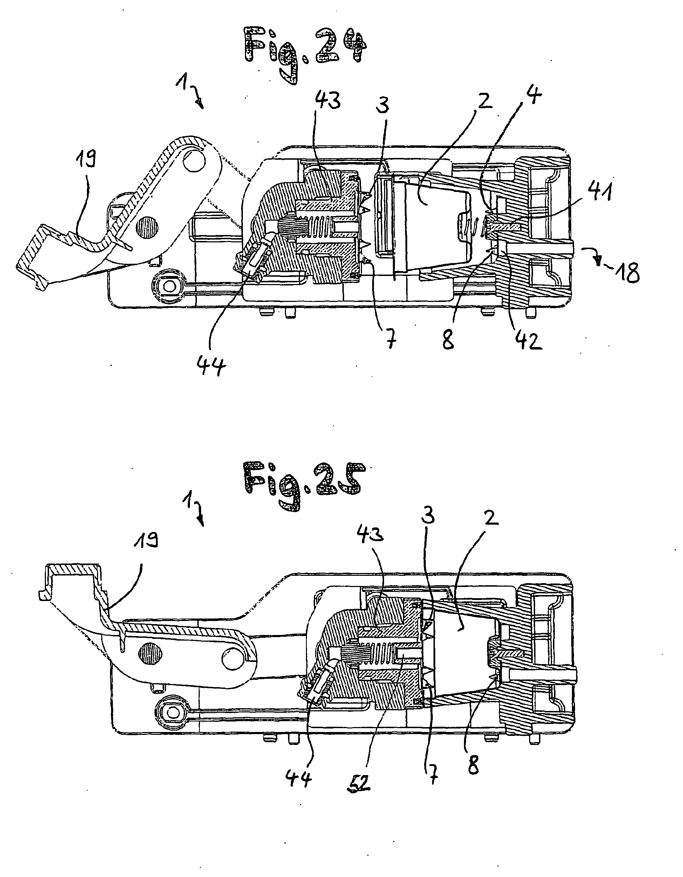

In den Figur 24 und 25 ist eine weitere mögliche Ausgestaltung der Vorrichtung 1 gezeigt. Die Vorrichtung 1 unterscheidet sich von der Vorrichtung gemäss Figur 1 durch einen leicht verschieden ausgebildeten Schliessmechanismus, der über den Betätigungshebel 19 betätigbar ist. Die nachfolgend näher beschriebenen Penetrationsmittel 3 und 4 weisen jeweils mehrere, pyramidenförmige Perforationselemente 7 und 8 auf. Wie weiterhin aus den Figuren 24 und 25 hervorgeht, ist die Vorrichtung 1 für eine andere Kapsel 2 konzipiert. Die Kapsel 2 verfügt an ihrem Boden über eine Rinne, die eine durch die Perforationselemente 8 penetrierbare Zone bildet. Diese oder vergleichbare Kapseln sind in der europäischen Patentanmeldung Nr. 07100520.1 beschrieben. Bezüglich weiterer konstruktiver Details zur Kapsel wird deshalb auf die erwähnte europäische Patentanmeldung verwiesen, die hiermit ausdrücklich als Teil der Offenbarung dieser Anmeldung gilt. Sodann ist etwa aus Figur 24 erkennbar, dass korrespondierend zu den Perforationselementen 8 am Boden der Kavität eine ringförmige Aufnahmewanne 42 angeordnet ist, die einen Ringspalt zwischen der Filterplatte 4 und dem Boden der Kavität bildet.

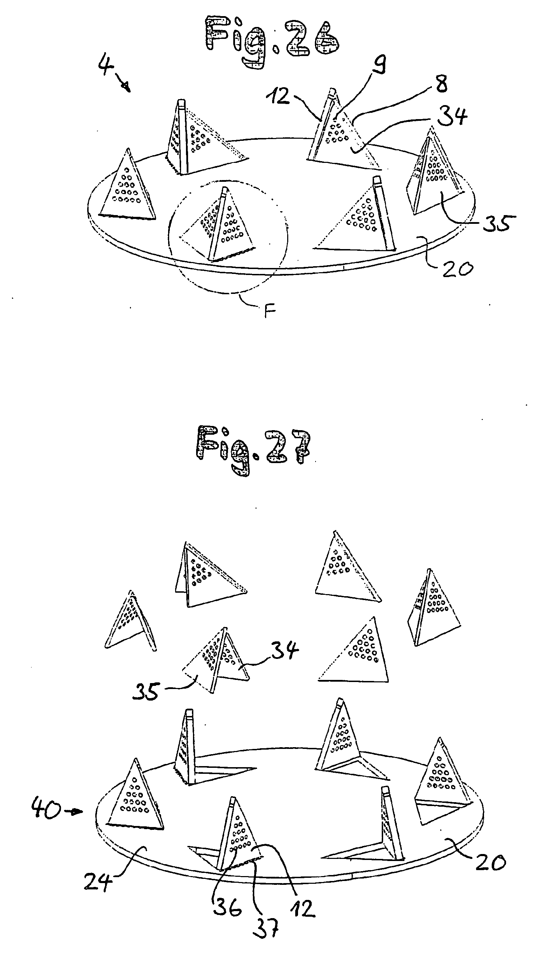

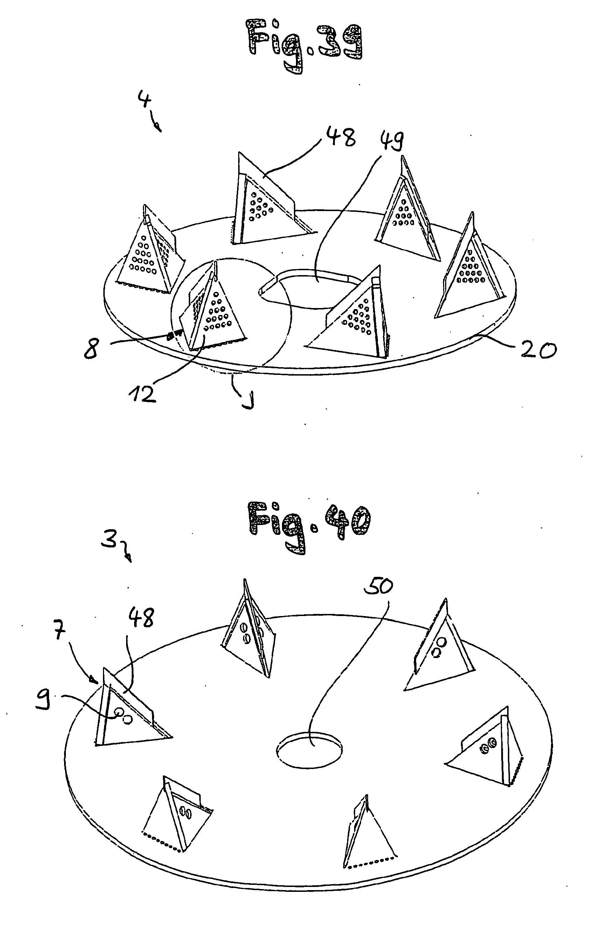

Figur 26 zeigt eine vereinfachte Darstellung einer Filterplatte 4 für die Vorrichtung gemäss Figur 24/25 (Vereinfachung deshalb, weil ein mittiges Loch für eine Befestigungsschraube 41 hier fehlt, siehe Fig. 24; vgl. aber Fig. 39). Das Mittel 4 weist sechs Perforationselemente 8 auf, die jeweils eine pyramidenartige Konfiguration aufweisen. Ein Perforationselement 8 besteht dabei aus dem Grundkörper 12 sowie zwei an diesem befestigte Flächenabschnitte 34 und 35. Diese Flächenabschnitte 34 und 35 bilden Durchleitflächen, auf denen eine Mehrzahl von Öffnungen 9 angeordnet sind. Diese Öffnungen 9 bilden eine Lochsieb-Struktur in Form eines Lochfelds. Derartige Lochfeld-Anordnungen sind bereits in den vorgängigen Ausführungsbeispielen beschrieben worden. Deren Dimensionierungen könnten auch für die Durchleitflächen der vorliegenden Perforationselementen 8 verwendet werden. Im Zusammenhang mit den vorliegenden, speziell ausgebildeten Perforationselementen 8 hat sich jedoch gezeigt, das Lochgrössen von 0,1 bis 0,3mm besonders vorteilhaft sein können. Im Gegensatz beispielsweise zur Filterplatte gemäss Figur 10 sind nicht nur Öffnungen an den Flächenabschnitten, sondern auch am Grundkörper 12 angeordnet. Beim Grundkörper 12 handelt es sich um ein flächiges Teil, das einstückig mit der Grundplatte 20 verbunden ist. Der genaue Aufbau des Penetrationsmittels wird nachfolgend anhand der Figur 27, 29 bis 33 genau beschrieben.

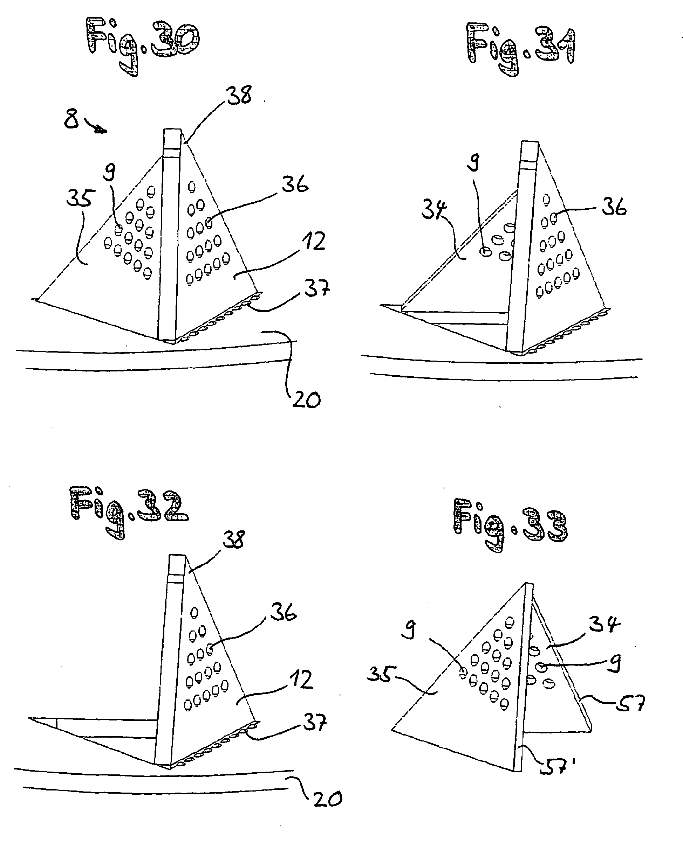

Aus der Darstellung gemäss Figur 27 geht hervor, dass das Penetrationsmittel 4 aus wenigstens zwei separaten Komponenten aufgebaut ist. Einerseits besteht es aus einem Grundbauteil 40 mit den Grundkörpern 12 und anderseits aus Flächenabschnitten 34 und 35. Die beiden Flächenabschnitte schliessen randseitig in einem spitzen Winkel aneinander an. Somit entsteht eine dachartige Konstruktion, wobei wie Figur 27 zeigt, in einem vorgefertigten Zustand die beiden Abschnitte 34 und 35 miteinander verbunden sind. Wie Figur 27 und insbesondere Figur 33 zeigt, ist der Flächenabschnitt 34 gegenüber einem entsprechenden Seitenrand des Flächenabschnitts 35 leicht nach innen versetzt, wodurch eine Schneidkante entsteht. Aus Figur 33 sind weiterhin mit 57 und 57' bezeichnete Seitenränder der Flächenabschnitte erkennbar, die zur Anlage an eine Innenfläche jeweils eines Grundkörpers vorgesehen sind. Wie das vorliegende Ausführungsbeispiel zeigt, verfügen nicht nur die Flächenabschnitte über Durchleitflächen mit entsprechenden Öffnungen 9, sondern ebenfalls die Grundkörper 12. Die entsprechenden Öffnungen im Grundkörper 12 sind mit 36 bezeichnet.

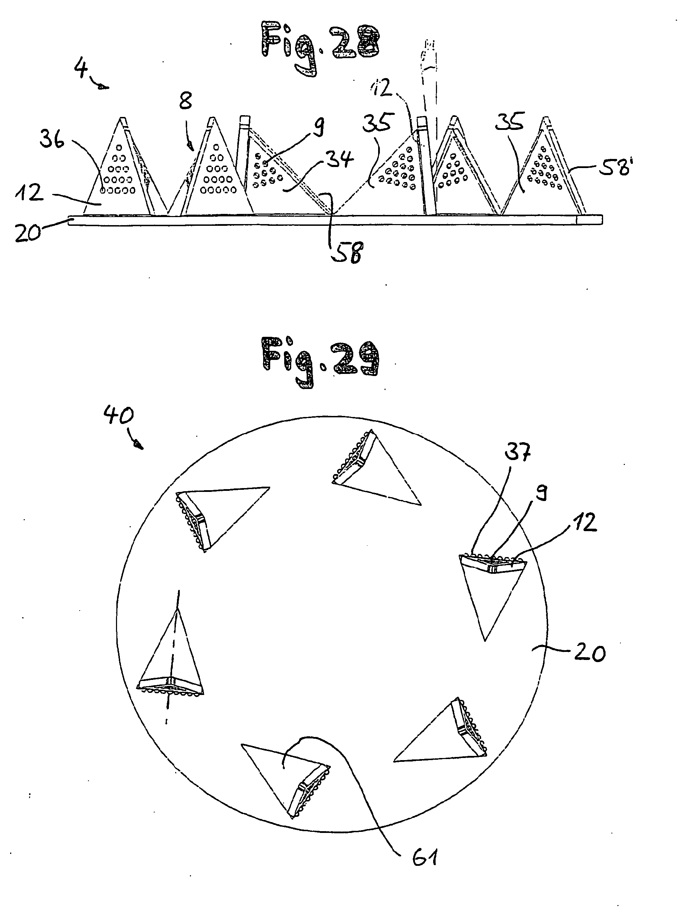

Aus der Figur 28 ist z.B. entnehmbar, dass der Grundkörper 12 in einem spitzen Winkel γ gegenüber der Perforationsrichtung ausgerichtet ist. Durch diese sehr steile Anordnung des Grundkörpers 12 lassen sich vorteilhafte Perforationsergebnisse erzielen. Der Neigungswinkel β beträgt im vorliegenden Fall ca. 5° Grad. Weiterhin ist hier gut erkennbar, dass der Flächenabschnitt 34 bzw. 35 jeweils gegenüber einem entsprechenden Rand 58 bzw. 58' des Grundkörpers 12 zur Bildung einer Schneidkante nach innen versetzt angeordnet ist.

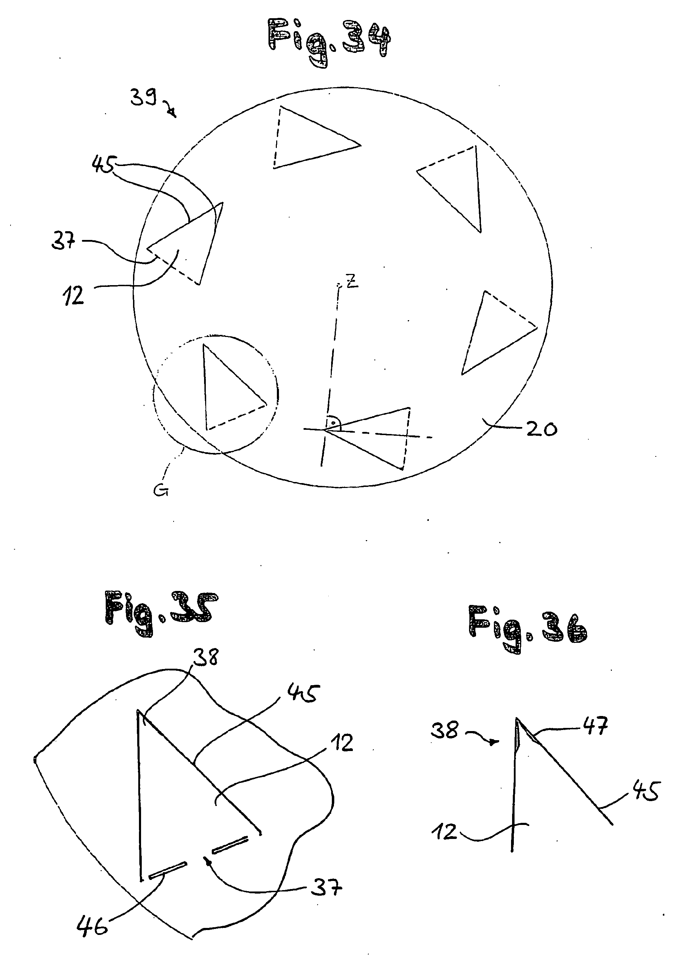

Aus Figur 29 sowie Figur 32 geht hervor, dass der als flächiges Teil ausgebildete Grundkörper 12 von einer flächigen Lage in die gezeigte Endlage aufgerichtet ist. Der Grundkörper 12 ist aus einem Zuschnitt herstellbar, wobei beim Aufricht-Vorgang ein entsprechend der Grundkörperform dreieckiges Loch 61 im Scheibenkörper 20 entsteht. Der zugehörige Zuschnitt ist in Figur 34 dargestellt. Der Zuschnitt 39 weist zwei Schnittlinien 45 auf, die spitzwinklig aufeinander zulaufen. Die Enden der Schnittlinien 45 sind durch eine gestrichelt dargestellte Linie 37 miteinander verbunden, die eine Biege- bzw. Klapplinie für den Aufrichte-Vorgang vorgibt. In Figur 34 ist weiterhin durch Hilfslinien die Lage der einzelnen Dreiecke im Zuschnitt ersichtlich (Symmetrieachse verläuft etwa rechtwinklig zur Verbindungslinie zwischen Zentrum Z und Spitze des Dreiecks).

Für einen definierten Aufricht-Vorgang kann es vorteilhaft sein, wenn der Zuschnitt entsprechende Schwächungslinien zum Vorgeben von Biege- bzw. Klapplinien aufweist. Eine mögliche Ausgestaltung einer derartigen Schwächungslinie ist in Figur 35 gezeigt. Hier ist erkennbar, dass die Schwächungslinie 37 durch zwei begrenzt ausgebildete Schnittlinienabschnitte 46 gebildet ist. Diese Schnitte können beispielsweise mittels Lasern erstellt werden. In den Figuren 34 und 35 sind die Spitzen der Dreiecke jeweils vereinfacht dargestellt. Wie jedoch aus Figur 36 hervorgeht, kann mittels Hinterschneidungen 47 eine weitere Zuspitzung der Spitze 38 erreicht werden. Selbstverständlich wäre es grundsätzlich aber auch vorstellbar, den Grundkörper als vom Scheibenkörper separates Bauteil auszubilden.

Die jeweiligen Flächen des Grundkörpers 12 sowie der Flächenabschnitte 34 und 35 sind plan oder etwa plan ausgebildet. Selbstverständlich wären aber auch grundsätzlich konvexe oder konkave Ausgestaltungen der einzelnen oder aller dieser Flächen vorstellbar. Die Dicke des Grundkörpers 12 und damit auch des Scheibenkörpers 20 kann zum Beispiel 0.4 mm betragen. Die am Grundkörper befestigten Flächenabschnitte 34 und 35 können dünner ausgestaltet sein, wobei sich eine Materialdicke von 0.2 mm als hinsichtlich Herstellbarkeit einerseits und Stabilität andererseits als vorteilhaft erwiesen hat.

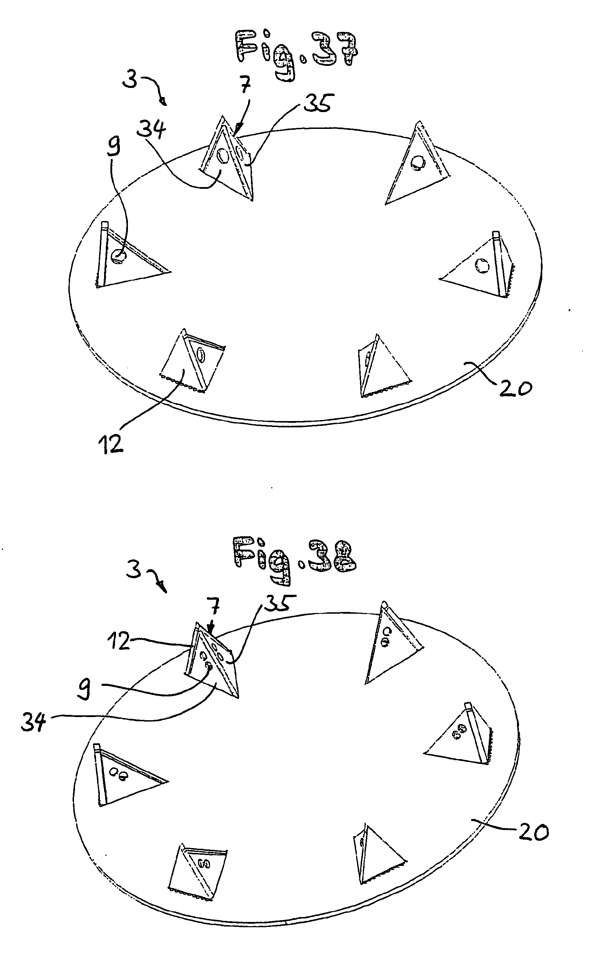

Die Figuren 37 und 38 zeigen zwei Ausgestaltungen von Injektorplatten. Analog zum Ausführungsbeispiel gemäss Figur 26 bestehen die Perforationselemente 7 einerseits aus einem Grundkörper 12 und andererseits aus zwei daran befestigten Flächenabschnitte 34 und 35. Unterschiede bestehen insbesondere darin, dass hier lediglich in den Flächenabschnitten Öffnungen zum Durchleiten von Fluid in Perforationselementen 7 vorgesehen sind. So weisen die Flächenabschnitte 34 und 35 gemäss Figur 37 jeweils eine, verhältnismässig grosse Öffnung 9 auf (der mögliche Durchmesser bewegt sich zwischen 0.2 mm und 2 mm). Im Ausführungsbeispiel gemäss Figur 38 sind jeweils zwei Öffnungen 9 in den Flächenabschnitten 34 und 35 mit entsprechend kleineren Durchmessern angeordnet. Weiterhin unterscheiden sich die Penetrationsmittel vom vorgenannten Ausführungsbeispiel dadurch, dass die jeweiligen Perforationselemente 7 zum Zentrum des Scheibenkörpers hin ausgerichtet sind.

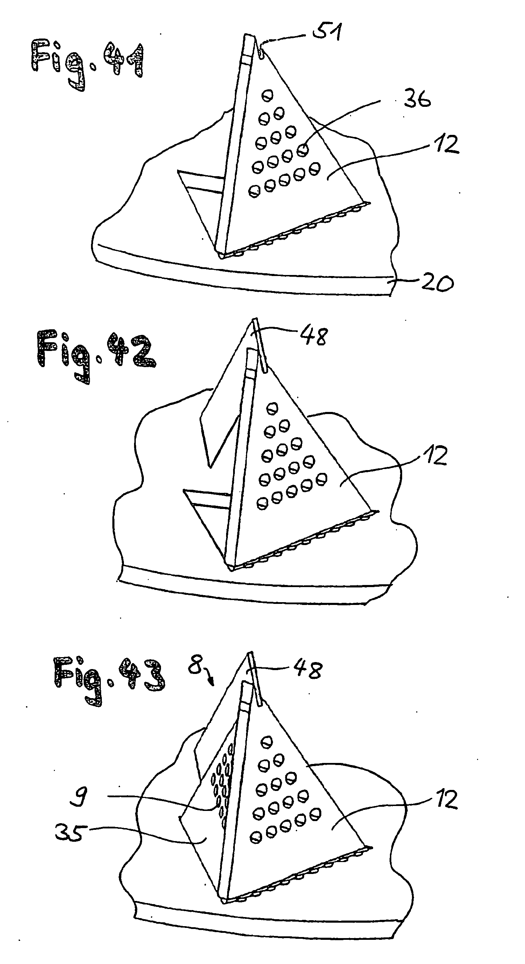

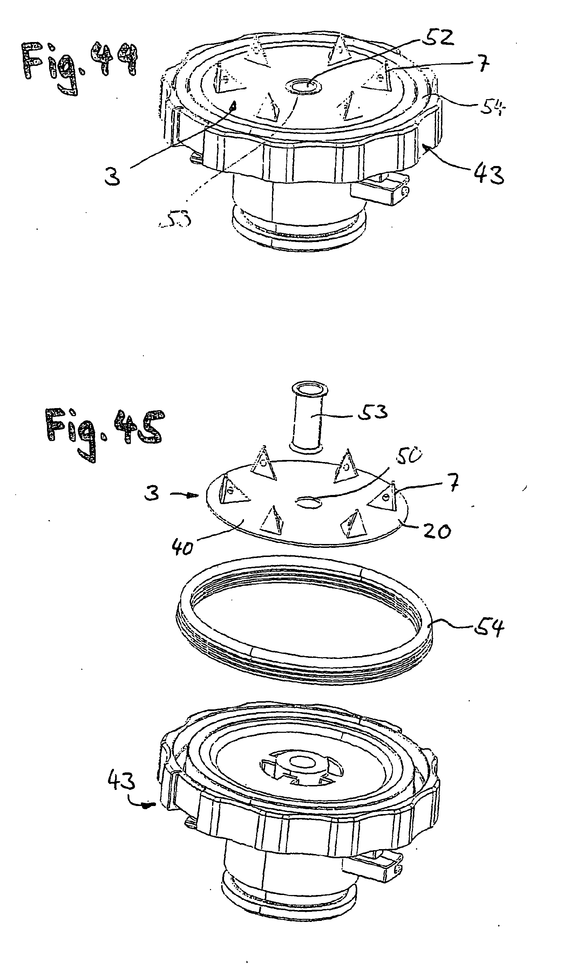

Die Figuren 39 und 40 zeigen weitere Abwandlungen von Penetrationsmitteln. Um die Perforation zu optimieren, sind die Perforationselemente 7 bzw. 8 mit Klingenelementen 48 ausgestattet, die zum erstmaligen Durchschneiden der Hülle der Portionsverpackung zum Einleiten eines Durchstoss-Vorgangs dienen. Derartige Klingenelemente können insbesondere bei der Verwendung von Kapseln aus Polypropylen vorteilhaft sein. In Figur 39 ist weiter ein zentrales Loch 49 für die Schraubverbindung erkennbar (vgl. Fig. 24). Auch die Injektorplatte 3 gemäss Figur 40 verfügt über ein mittiges Loch 50 (vgl. nachfolgende Figuren 44 und 45). Wie aus den Figuren 41 bis 43 hervorgeht, verfügt der Grundkörper 12 im Bereich seiner Spitze einen Schlitz 51 zur Aufnahme des Klingenelements (Fig. 41). Ein in den Schlitz eingestecktes Klingenelement 48 kann mit dem Grundkörper 12 und/oder den Flächenabschnitten des Perforationselements 8 verschweisst sein.

Figur 44 zeigt ein in die Extraktionsvorrichtung einbaubares Anschlussteil 43 (vgl. Fig. 24), in dem mittels einer zentralen Spannhülse 53 die Injektorplatte 3 bzw. das Grundbauteil 40 der Injektorplatte gehalten ist. Weiterhin ist noch eine den Scheibenkörper der Filterplatte umschliessende ringförmige Dichtung 54 im Anschlusselement 43 angeordnet. Das Anschlusselement 43 weist Verbindungsmittel zur Vorrichtung in Form eines BajonettVerschlusses auf. Die einzelnen Komponenten sind in Figur 45 nochmals gezeigt.

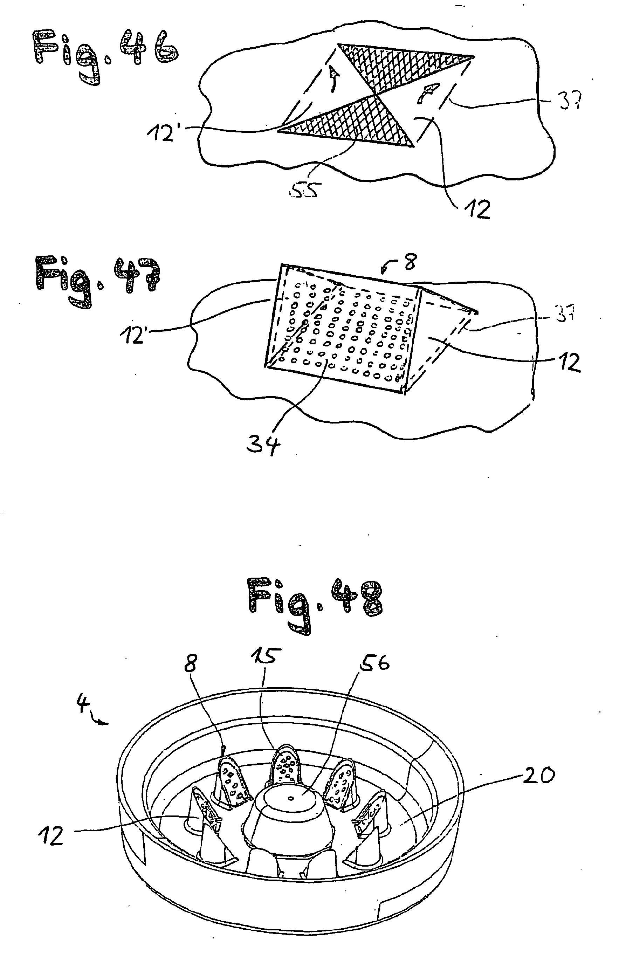

Wie Figur 47 zeigt, kann ein Perforationselement auch mehrere Grundkörper aufweisen. Im vorliegenden Fall weist das Perforationselement 8 zwei voneinander beabstandete, dreieckige Grundkörper 12 und 12' auf. Der Abstand zwischen den Grundkörpern 12, 12' ist durch den Flächenabschnitt 34 überbrückt, der als Durchleitfläche mit einer Vielzahl von Öffnungen versehen ist. Ein möglicher Zuschnitt für dieses Perforationselement ist in Figur 46 gezeigt. Die dreieckigen Flächen für die Grundkörper 12 und 12' sind einerseits durch entsprechende Biegelinien 37 und andererseits durch einander gegenüberliegende, dreieckförmige und durch eine Schraffur speziell gekennzeichnete Aussparung 55 vorgegeben.

Figur 48 zeigt eine weitere mögliche Ausgestaltung eines Penetrationsmittels. Die Grundform der Grundkörper 12 ist nahezu zylindrisch ausgebildet. Der Zylinder ist jedoch geschnitten, wobei leicht zurückversetzt gegenüber der Schnittfläche ein Vollabschnitt 15 mit Öffnungen als Durchleitfläche am Grundkörper befestigt ist. Erkennbar ist weiterhin eine zentrale, etwa kegelstumpfförmige Erhöhung 56, die etwa komplenetär zu einem entsprechenden Boden einer Kapsel ausgebildet ist (vlg. Fig. 24).

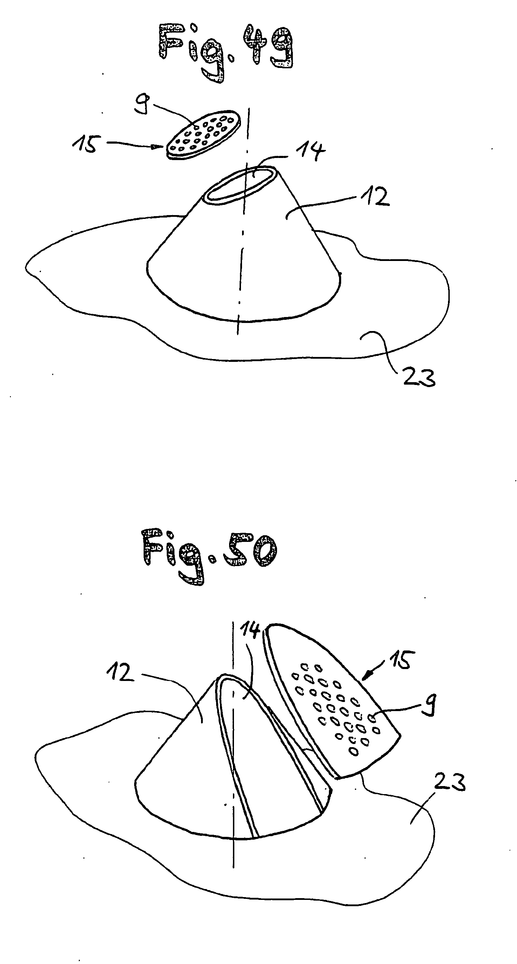

Wie die Figuren 49 und 50 zeigen, können die Grundkörper 12 kegelig ausgebildet sein, wobei der Kegel derart geschnitten sein kann, dass ein eliptischer Schnitt (Figur 49) oder ein parabelförmiger Schnitt (Figur 50) entsteht. Die jeweiligen Hohlkörperöffnungen 14 können durch entsprechende Flächenabschnitte 15 abgedeckt werden.

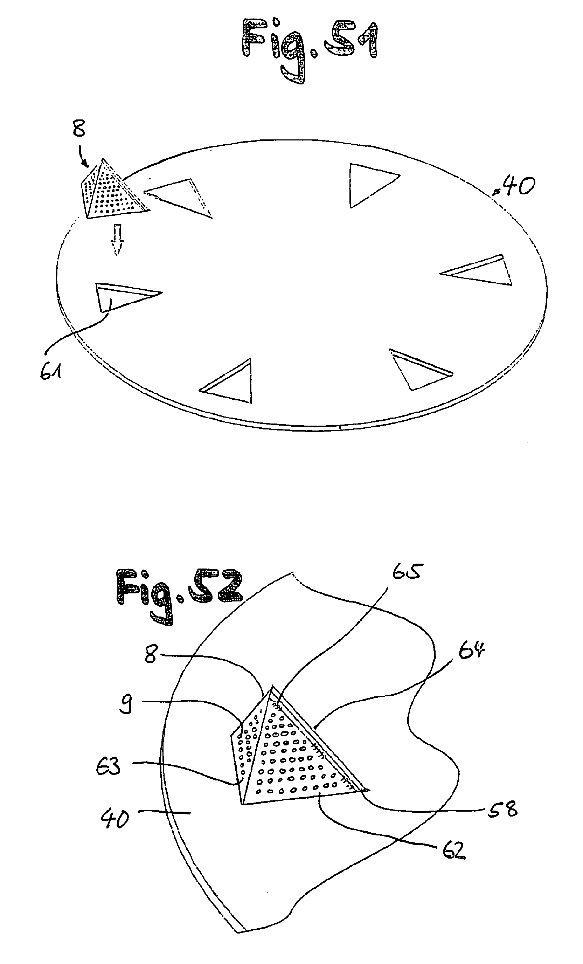

Figur 51 zeigt in einer Explosionsdarstellung zwei Komponenten für eine Filterplatte. Die Filterplatte besteht aus einem scheibenförmigen Grundbauteil 40, in dem sechs dreieckförmige Löcher 61 angeordnet sind. Korrespondierend zu den Löchern 61 werden an das Grundbauteil 40 Perforationselemente 8 durch Verschweissen befestigt. Im Unterschied beispielsweise zum Ausführungsbeispiel gemäss Figur 26 entsteht somit ein Penetrationsmittel, das ohne Grundkörper auskommt. Der genaue Aufbau dieses speziellen Perforationselements 8 ist nachfolgend anhand der Figuren 52 bis 54 im Detail beschrieben.

Das Perforationselement besteht aus drei zusammenhängenden Flächenabschnitten 62, 63 und 64, die pyramidenartig zusammengesetzt sind, wobei die Pyramidenform durch eine Schweissverbindung stabilisiert ist. In Figur 52 sind drei mit 65 angedeutete Kehlnähte erkennbar, mit denen der an die Innenfläche des Flächenabschnitts 62 anliegende Flächenabschnitt 64 verbunden ist. Der Flächenabschnitt 62 ist ersichtlicherweise gegenüber dem Rand 58 des Flächenabschnitts 64 nach innen versetzt angeordnet, wodurch eine vorteilhafte Schneidkante gebildet wird. Die jeweiligen Flächenabschnitte sind mit einer Vielzahl von Öffnungen 9 versehen. Hinsichtlich der Lochsieb-Struktur der Öffnungen wird auf die vorgängigen Ausführungen verwiesen, die grundsätzlich auch für dieses Ausführungsbeispiel gelten.

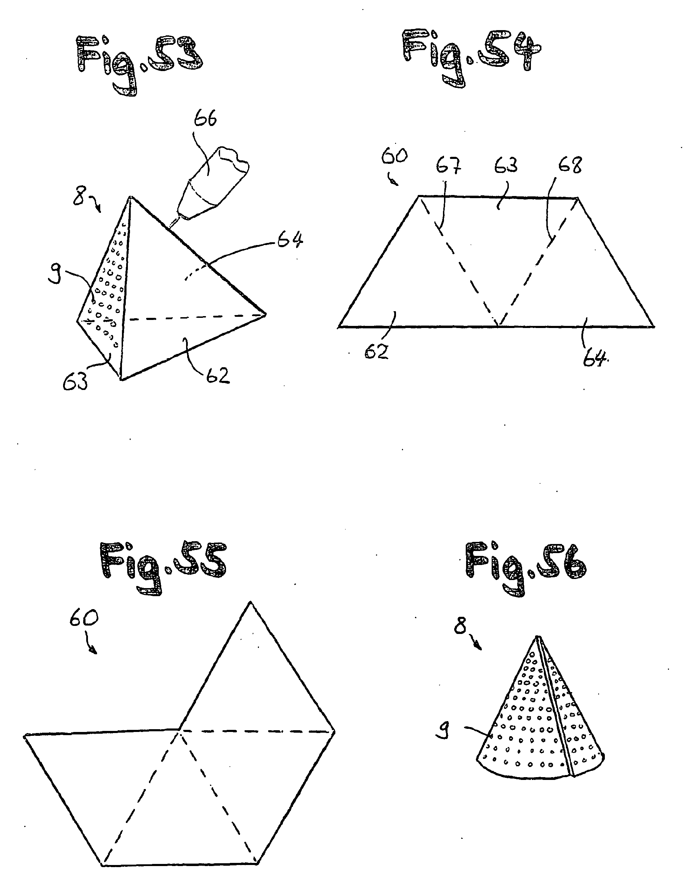

In Figur 53 ist das Perforationselement 8 als Tetraeder ausgebildet. Im Gegensatz zum Perforationselement gemäss Figur 52 bilden die Flächenabschnitte 62 und 64 eine gemeinsame Seitenkante. Zum Stabilisieren des Tetraeders werden die Flächenabschnitte 62 und 64 zum Beispiel durch Laserschweissung miteinander vebunden. In Figur 53 ist eine entsprechende Schweisseinheit mit 66 gezeichnet. Weiterhin geht aus Figur 53 hervor, dass nicht unbedingt sämtliche Flächenabschnitte mit Öffnungen 9 versehen sein müssen. Das Perforationselement könnte selbstverständlich auch für eine Injektorplatte verwendet werden. Sodann wäre es sogar vorstellbar, derartige Perforationselement ohne Öffnungen auszubilden. In diesem Fall könnten die Öffnungen zum Durchleiten des Fluids beispielsweise in der scheibenförmigen Grundplatte angeordnet sein.

In Figur 54 ist ein Zuschnitt 60 für das Perforationselement gemäss Figur 53 gezeigt. Der Zuschnitt 60 besteht aus den drei Flächenabschnitten 62, 63 und 64, die jeweils durch Schwächungslinien 67 und 68 voneinander getrennt sind. Die Schwächungslinien 67 und 68 erleichtern ein definiertes Umklappen der jeweiligen Flächenabschnitte bei einem Aufricht-Vorgang zum Erstellen der Endlage des Perforationselements. Die Schwächungslinien können analog zum Ausführungsbeispiel gemäss Figur 35 aus begrenzt sich entlang der Linien erstreckenden Schnittlinienabschnitten bestehen. Auf einen solchen Zuschnitt 60 können in dieser flächigen Lage auf einfache Art und Weise Öffnungen in der gewünschten Konfiguration beispielsweise durch Laserbohr-Verfahren aufgebracht werden. Der Zuschnitt 60 besteht vorteilhaft aus einer Folie oder einem dünnen Blech aus Metall, insbesondere aus Stahl. Die Dicke der Folie bzw. des Blechs kann zwischen 0,2 und 0,5 mm liegen.

Figur 55 zeigt einen weiteren Zuschnitt für ein Perforationselement, bei dem gegenüber Figur 54 ein zusätzlicher Flächenabschnitt angehängt ist. Mit diesem Zuschnitt 60 lässt sich ein Perforationselement in Form einer Pyramide mit einer quadratischen Grundfläche aufrichten.

Wie aus Figur 56 hervorgeht, müssen die aus einem flächigen Material bestehenden Perforationselemente nicht unbedingt mehrflächig ausgebildet sein. Figur 56 zeigt ein entsprechendes Perforationselement 8, das als Kegel ausgebildet ist. Der Kegel wird aus einem entsprechend geformten flächigen Zuschnitt gebildet, wobei die beiden Enden überlappend miteinander verbunden werden, wodurch sich der in Figur 56 gezeigte Kegel aufrichten lässt.

## Patentansprüche

1. Mittel zum Penetrieren einer ein Extraktionsgut enthaltenden Portionsverpackung (2), insbesondere einer Kapsel, mit wenigstens einem Perforationselement (7, 8), mit welchem eine Hülle der Portionsverpackung (2) in einer Perforationsrichtung durchstossbar ist, wobei das Perforationselement (7, 8) eine Mehrzahl von Öffnungen (9) aufweist, durch welche ein Fluid durchleitbar ist, **dadurch gekennzeichnet, dass** das Perforationselement (7,8) als mehrflächiger Körper ausgebildet ist, wobei wenigstens eine der Flächen eine gegen die Perforationsrichtung geneigte Fläche (10,11,34,35,62,63,64) ist, auf der die Öffnungen (9) vorzugsweise in Lochsieb-Struktur angeordnet sind.

2. Mittel nach Anspruch 1, **dadurch gekennzeichnet, dass** wenigstens eine der Flächen (10,11,34,35,62,63,64), auf der Öffnungen (9) in Lochsieb-Struktur angeordnet sind, eine plane oder konkav gekrümmte Fläche ist.

3. Mittel nach Anspruch 1 oder 2, **dadurch gekennzeichnet, dass** eine mit Öffnungen (9) in Lochsieb-Struktur versehene Durchleitfläche (10, 11) eine Keilfläche ist oder bildet, die vorzugsweise zum Zentrum des Mittels hin gerichtet ist.

4. Mittel nach einem der Ansprüche 1 bis 3, **dadurch gekennzeichnet, dass** die Öffnungen (9) jeweils Rundlöcher sind, wobei der Durchmesser (d) der Rundlöcher zwischen 0,1 und 0,5mm und bevorzugt zwischen 0,2 und 0,3 mm liegt.

5. Mittel nach einem der Ansprüche 1 bis 4, **dadurch gekennzeichnet, dass** das wenigstens eine Perforationselements (7, 8) als eine Pyramide mit einer vorzugsweise dreieckigen Grundfläche ausgebildet ist, wobei wenigstens eine der Seitenflächen (34,35,62,63,64) der Pyramide Öffnungen (9) in Lochsieb-Struktur aufweist oder dass der mehrflächige Körper für das wenigstens eine Perforationselement (7) als angeschnittener Formkörper ausgebildet ist, insbesondere als angeschnittener Kegel, als angeschnittene Pyramide oder als angeschnittener Keil und dass eine mit Öffnungen (9) in Lochsieb-Struktur versehene Durchleitfläche (10, 11) durch den vorzugsweise schiefen Schnitt vorgegeben ist.

6. Mittel nach einem der Ansprüche 1 bis 5, **dadurch gekennzeichnet, dass** es ein vorzugsweise scheibenförmiges Grundbauteil (20,40) mit einer Auflageoberseite (23,24) zur Abstützung der Portionsverpackung (2) aufweist, und dass das wenigstens eine Perforationselement (7, 8) gegenüber dem Grundbauteil (20,40) als separates Bauteil ausgebildet ist.

7. Mittel nach einem der Ansprüche 1 bis 6, **dadurch gekennzeichnet, dass** es eine Mehrzahl von Perforationselementen (7,8) aufweist.

8. Mittel nach einem der Ansprüche 1 bis 7, **dadurch gekennzeichnet, dass** das Perforationselement (7, 8) wenigstens teilweise aus einem flächigen Material, insbesondere einer Folie oder einem Blech aus Metall besteht.

9. Mittel nach Anspruch 8, **dadurch gekennzeichnet, dass** das Perforationselement (7, 8) aus wenigstens einem Zuschnitt (60) gebildet ist, der aus einer flächigen Lage in eine Endlage aufgerichtet ist, wobei der aufgerichtete Zuschnitt in der Endlage die Form des Perforationselements (7,8) ganz oder teilweise vorgibt.

10. Mittel nach Anspruch 8 oder 9, **dadurch gekennzeichnet, dass** das Perforationselement (7, 8) aus einem einzigen Zuschnitt (60) gebildet ist.

11. Mittel nach Anspruch 9 oder 10, **dadurch gekennzeichnet, dass** der aufgerichtete Zuschnitt in der Endlage mittels einer Schweissverbindung stabilisiert ist.

12. Mittel nach einem der Ansprüche 8 bis 11, **dadurch gekennzeichnet, dass** das Perforationselement (7, 8) wenigstens zwei aneinander stossende, eine gemeinsame Seitenkante bildende Flächenabschnitte (62,63,64) enthält, wobei die Flächenabschnitte (62,63,64) um die Seitenkante (67,68) umgeklappt sind.

13. Mittel nach Anspruch 12, **dadurch gekennzeichnet, dass** zum Vorgeben der Seitenkante im Zuschnitt (60) eine Schwächungslinie (67,68), insbesondere eine Schwächungslinie mit sich begrenzt in Richtung der Schwächungslinie erstreckenden Schnittlinienabschnitten angeordnet ist, um die die Flächenabschnitte (62,63,64) umklappbar sind.

14. Mittel nach einem der Ansprüche 8 bis 13, **dadurch gekennzeichnet, dass** der Zuschnitt (60) wenigstens drei, jeweils dreieckige Flächenabschnitte (62,63,64) aufweist, wobei der Zuschnitt (60) durch Umklappen der Flächenabschnitte (63,63,64) derart aus der flächigen Lage aufrichtbar ist, dass in der Endlage ein pyramidenartiger Hohlkörper vorliegt.

15. Mittel nach Anspruch 6 und einem der Ansprüche 8 bis 14, **dadurch gekennzeichnet, dass** das Perforationselement (7, 8) an das Grundbauteil (20,40) geschweisst ist.

16. Mittel nach einem der Ansprüche 1 bis 15, **dadurch gekennzeichnet, dass** ein Klingenelement (48) zum erstmaligen Durchschneiden der Hülle der Portionsverpackung (2) zum einleiten des Durchstossvorgangs an wenigstens einem Flächenabschnitt (34, 35) angebracht ist.

17. Mittel nach Anspruch 6 und einem der Ansprüche 1 bis 16, **dadurch gekennzeichnet, dass** es weiter wenigstens eine zentrale Öffnung (52) im Grundbauteil (40) zum zusätzlichen und/oder alternativen Ein- oder zum Ausleiten von Fluid in oder aus einer durch das wenigstens eine Perforationselement (8) perforierte Portionsverpackung (2) aufweist.

18. Mittel nach Anspruch 17, **dadurch gekennzeichnet, dass** das Grundbauteil (40) über eine zentrale Spannhülse (53) mit einem in eine Extraktionsvorrichtung (1) einbaubaren Anschlussteil (43) verbunden ist, wobei die Spannhülse die zentrale Öffnung (52) bildet.

19. Vorrichtung zum Extrahieren eines in einer Portionsverpackung, insbesondere in einer Kapsel (2) enthaltenen Extraktionsgutes mit einem flüssigen Extraktionsmittel, enthaltend zwei zur Bildung einer Extraktionskammer gegeneinander pressbare Kammerteile, wobei ein Kammerteil als Kapselhalter (5) mit einer Kavität (16) zur Aufnahme der Kapsel (2) und das andere Kammerteil als Verschlussteil (6) zum Verschliessen der Kavität ausgebildet ist, und wobei wenigstens einem der Kammerteile, vorzugsweise jedem Kammerteil Mittel (3,4) zum Penetrieren der Kapsel und zum Durchleiten des Extraktionsmittels durch die geschlossene Extraktionskammer gemäss einem der Ansprüche 1 bis 18 zugeordnet sind.

20. Vorrichtung nach Anspruch 19, **dadurch gekennzeichnet, dass** wenigstens eines der Mittel (3, 4) mit der Vorrichtung (1) verschraubt ist.

## Claims

1. Means for penetrating a portion packaging (2) containing an extraction product, in particular a capsule, with at least one perforation element (7, 8) with which a casing of the portion packaging (2) can be pierced in a perforation direction, the perforation element (7, 8) having a plurality of openings (9) through which a fluid can be passed, **characterized in that** the perforation element (7, 8) is designed as a multi-surface body, with at least one of the surfaces being a surface (10, 11, 34, 35, 62, 63, 64) which is inclined in the perforation direction and on which the openings (9) are arranged preferably in a strainer structure.

2. Means according to Claim 1, **characterized in that** at least one of the surfaces (10, 11, 34, 35, 62, 63, 64) on which openings (9) are arranged in a strainer structure is a planar or concavely curved surface.

3. Means according to Claim 1 or 2, **characterized in that** a pass-through surface (10, 11) which is provided with openings (9) in a strainer structure is or forms a wedge surface which is preferably directed towards the centre of the means.

4. Means according to one of Claims 1 to 3, **characterized in that** the openings (9) are each round holes, with the diameter (d) of the round holes being between 0.1 and 0.5 mm and preferably between 0.2 and 0.3 mm.

5. Means according to one of Claims 1 to 4, **characterized in that** the at least one perforation element (7, 8) is designed as a pyramid with a preferably triangular basic surface, with at least one of the side surfaces (34, 35, 62, 63, 64) of the pyramid having openings (9) in a strainer structure, or **in that** the multi-surface body for the at least one perforation element (7) is designed as a trimmed shaped body, in particular as a trimmed cone, as a trimmed pyramid or as a trimmed wedge, and **in that** a pass-through surface (10, 11) which is provided with openings (9) in a strainer structure is predetermined by the preferably sloping section.

6. Means according to one of Claims 1 to 5, **characterized in that** it has a preferably disc-shaped basic component (20, 40) with an upper supporting side (23, 24) for supporting the portion packaging (2), and **in that** the at least one perforation element (7, 8) is designed as a separate component in relation to the basic component (20, 40).

7. Means according to one of Claims 1 to 6, **characterized in that** it has a plurality of perforation elements (7, 8).

8. Means according to one of Claims 1 to 7, **characterized in that** the perforation element (7, 8) is at least partially composed of a sheet-like material, in particular of a foil or a metal sheet.

9. Means according to Claim 8, **characterized in that** the perforation element (7, 8) is formed from at least one blank (60) which is raised from a sheet-like position into an end position, with the raised blank in the end position entirely or partially predetermining the shape of the perforation element (7, 8).

10. Means according to Claim 8 or 9, **characterized in that** the perforation element (7, 8) is formed from a single blank (60).

11. Means according to Claim 9 or 10, **characterized in that** the raised blank is stabilized in the end position by means of a welded joint.

12. Means according to one of Claims 8 to 11, **characterized in that** the perforation element (7, 8) contains at least two abutting surface sections (62, 63, 64) forming a common side edge, with the surface sections (62, 63, 64) being folded around the side edge (67, 68).

13. Means according to Claim 12, **characterized in that**, in order to predetermine the side edge in the blank (60), there is a line of weakness (67, 68), in particular a line of weakness with section line portions which extend to a limited extent in the direction of the line of weakness and about which the surface sections (62, 63, 64) can be folded over.

14. Means according to one of Claims 8 to 13, **characterized in that** the blank (60) has at least three, in each case triangular surface sections (62, 63, 64), the blank (60), by folding over of the surface sections (62, 63, 64), being raisable from the sheet-like position in such a manner that a pyramid-like hollow body is present in the end position.

15. Means according to Claim 6 and one of Claims 8 to 14, **characterized in that** the perforation element (7, 8) is welded onto the basic component (20, 40).

16. Means according to one of Claims 1 to 15, **characterized in that** a blade element (48) for cutting through the casing of the portion packaging (2) for the first time in order to initiate the piercing operation is attached to at least one surface section (34, 35).

17. Means according to Claim 6 and one of Claims 7 to 16, **characterized in that** it furthermore has at least one central opening (52) in the basic component (40) for the additional and/or alternative conducting of fluid into or out of a portion packaging (2) perforated by the at least one perforation element (8).

18. Means according to Claim 17, **characterized in that** the basic component (40) is connected via a central clamping sleeve (53) to a connecting part (43) which can be fitted into an extraction device (1), the clamping sleeve forming the central opening (52).

19. Device for extracting an extraction product contained in a portion packaging, in particular in a capsule (2), with a liquid extractant, the device containing two chamber parts which can be pressed against each other to form an extraction chamber, one chamber part being designed as a capsule holder (5) with a cavity (16) for receiving the capsule (2) and the other chamber part being designed as a closure part (6) for closing the cavity, and at least one of the chamber parts, preferably each chamber part, being assigned means (3, 4) for penetrating the capsule and for passing the extractant through the closed extraction chamber according to one of Claims 1 to 18.

20. Device according to Claim 19, **characterized in that** at least one of the means (3, 4) is screwed to the device (1).

## Revendications

1. Moyen pour transpercer un emballage-portion (2) comportant un élément d'extraction, en particulier d'une capsule, avec au moins un élément de perforation (7, 8), avec lequel une enveloppe de l'emballage-portion (2) peut être transpercée dans une direction de perforation, dans lequel l'élément de perforation (7, 8) présente une pluralité d'ouvertures (9), à travers lesquelles un fluide peut être conduit, **caractérisé en ce que** l'élément de perforation (7, 8) se présente sous la forme d'un corps à plusieurs faces, dans lequel au moins une des faces est une face (10, 11, 34, 35, 62, 63, 64) inclinée par rapport à la direction de perforation, sur laquelle les ouvertures (9) sont disposées de préférence en une structure de tamis perforé.

2. Moyen selon la revendication 1, **caractérisé en ce qu'**au moins une des faces (10, 11, 34, 35, 62, 63, 64), sur laquelle des ouvertures (9) sont disposées en une structure de tamis perforé, est une face plane ou à courbure concave.

3. Moyen selon la revendication 1 ou 2, **caractérisé en ce qu'**une face de passage (10, 11) pourvue d'ouvertures (9) en une structure de tamis perforé est ou forme une face oblique, qui est orientée de préférence vers le centre du moyen.

4. Moyen selon l'une quelconque des revendications 1 à 3, **caractérisé en ce que** les ouvertures (9) sont chaque fois des trous ronds, dans lequel le diamètre (d) des trous ronds est compris entre 0,1 et 0,5 mm et de préférence entre 0,2 et 0,3 mm.

5. Moyen selon l'une quelconque des revendications 1 à 4, **caractérisé en ce que** l'au moins un élément de perforation (7, 8) se présente sous la forme d'une pyramide avec une face de base de préférence triangulaire, dans lequel au moins une des faces latérales (34, 35, 62, 63, 64) de la pyramide présente des ouvertures (9) en une structure de tamis perforé ou **en ce que** le corps à plusieurs faces pour l'au moins un élément de perforation (7) se présente sous la forme d'un corps profilé tronqué, en particulier de cône tronqué, de pyramide tronquée ou de coin tronqué, et **en ce qu'**une face de passage (10, 11) pourvue d'ouvertures (9) en une structure de tamis perforé est prédéfinie par la coupe de préférence oblique.

6. Moyen selon l'une quelconque des revendications 1 à 5, **caractérisé en ce qu'**il présente une pièce de base (20, 40) de préférence en forme de disque avec une face supérieure d'appui (23, 24) pour supporter l'emballage-portion (2), et **en ce que** l'au moins un élément de perforation (7, 8) se présente sous la forme d'une pièce séparée de la pièce de base (20, 40).

7. Moyen selon l'une quelconque des revendications 1 à 6, **caractérisé en ce qu'**il présente une pluralité d'éléments de perforation (7, 8).

8. Moyen selon l'une quelconque des revendications 1 à 7, **caractérisé en ce que** l'élément de perforation (7, 8) se compose au moins partiellement d'un matériau plat, en particulier d'une feuille ou d'une tôle en métal.

9. Moyen selon la revendication 8, **caractérisé en ce que** l'élément de perforation (7, 8) est formé par au moins un flan (60), qui est relevé d'une position plate à une position finale, dans lequel le flan relevé dans la position finale prédéfinit entièrement ou partiellement la forme de l'élément de perforation (7, 8).

10. Moyen selon la revendications 8 ou 9, **caractérisé en ce que** l'élément de perforation (7, 8) est formé à partir d'un seul flan (60).

11. Moyen selon la revendication 9 ou 10, **caractérisé en ce que** le flan relevé est stabilisé dans la position finale au moyen d'une liaison soudée.

12. Moyen selon l'une quelconque des revendications 8 à 11, **caractérisé en ce que** l'élément de perforation (7, 8) comprend au moins deux parties de face (62, 63, 64) butant l'une contre l'autre et formant un bord latéral commun, dans lequel les parties de face (62, 63, 64) sont rabattues autour du bord latéral (67, 68).

13. Moyen selon la revendication 12, **caractérisé en ce qu'**une ligne d'affaiblissement (67, 68), en particulier une ligne d'affaiblissement avec des segments de ligne de coupe s'étendant de façon limitée dans la direction de la ligne d'affaiblissement, est disposée dans le flan (60) pour prédéfinir le bord latéral, et autour de laquelle les parties de face (62, 63, 64) sont rabattables.

14. Moyen selon l'une quelconque des revendications 8 à 13, **caractérisé en ce que** le flan (60) présente au moins trois parties de face (62, 63, 64) chaque fois triangulaires, dans lequel le flan (60) peut être relevé à partir de la position plate par rabattement des parties de face (62, 63, 64), de telle manière qu'il existe en position finale un corps creux en forme de pyramide.

15. Moyen selon la revendication 6 et l'une quelconque des revendications 8 à 14, **caractérisé en ce que** l'élément de perforation (7, 8) est soudé à la pièce de base (20, 40).

16. Moyen selon l'une quelconque des revendications 1 à 15, **caractérisé en ce qu'**un élément de lame (48) est monté sur au moins une partie de face (34, 35) pour le premier découpage de l'enveloppe de l'emballage-portion (2) en vue d'entamer l'opération de percement.

17. Moyen selon la revendication 6 et l'une quelconque des revendications 1 à 16, **caractérisé en ce qu'**il présente en outre au moins une ouverture centrale (52) dans la pièce de base (40) pour l'introduction et/ou l'évacuation supplémentaire et/ou alternative de fluide dans ou hors d'un emballage-portion (2) perforé par l'au moins un élément de perforation (8).

18. Moyen selon la revendication 17, **caractérisé en ce que** la pièce de base (40) est reliée par une douille de serrage centrale (53) à une pièce de raccordement (43) pouvant être montée dans un dispositif d'extraction (1), dans lequel la douille de serrage forme l'ouverture centrale (52).

19. Dispositif d'extraction d'un élément d'extraction contenu dans un emballage-portion, en particulier dans une capsule (2), avec un moyen d'extraction liquide, comprenant deux parties de chambre pouvant être pressées l'une contre l'autre pour former une chambre d'extraction, dans lequel une partie de chambre se présente sous la forme de support de capsule (5) avec une cavité (16) destinée à recevoir la capsule (2) et l'autre partie de chambre se présente sous la forme d'une pièce de fermeture (6) destinée à fermer la cavité, et dans lequel des moyens (3, 4) sont associés à au moins une des parties de chambre, de préférence à chaque partie de chambre, pour transpercer la capsule et pour conduire le moyen d'extraction à travers la chambre d'extraction fermée, selon l'une quelconque des revendications 1 à 18.

20. Dispositif selon la revendication 19, **caractérisé en ce qu'**au moins un des moyens (3, 4) est vissé au dispositif (1).
